# EUROPÄISCHE PATENTSCHRIFT

(11) **EP 3 718 732 B1**
(45) Veröffentlichungstag und Bekanntmachung des Hinweises auf die Patenterteilung: **06.12.2023**
(21) Anmeldenummer: 20167277.1
(22) Anmeldetag: 31.03.2020
(51) Int. Cl.: B29C 45/16, B29C 67/24, B29C 45/12, B29C 45/64, B29K 75/00, B29L 9/00

(54) **VERFAHREN UND VORRICHTUNG ZUR HERSTELLUNG VON MEHRKOMPONENTIGEN KUNSTSTOFFFORMTEILEN**
METHOD AND DEVICE FOR MANUFACTURING MULTICOMPONENT PLASTIC MOULDED ARTICLES
PROCÉDÉ ET DISPOSITIF DE FABRICATION DES PIÈCES MOULÉES EN MATIÈRE PLASTIQUE À PLUSIEURS COMPOSANTS

(30) Priorität: 02.04.2019 DE 102019108646; 16.09.2019 DE 102019124891; 27.03.2020 DE 102020108596
(43) Veröffentlichungstag der Anmeldung: 07.10.2020
(73) Patentinhaber: GK Concept GmbH, 01067 Dresden (DE)
(72) Erfinder: Pirl, Sebastian, 01159 Dresden (DE); Kaufmann, Roger, 80469 München (DE); Richter, Jens, 01809 Heidenau (DE)
(74) Vertreter: Schied, Sebastian

(56) Entgegenhaltungen:
- EP-A2- 0 903 213
- WO-A1-2006/072366
- DE-A1-102006 021 021
- DE-A1-102007 051 701
- DE-A1-102011 117 267
- DE-C1- 19 650 854
- DE-U1-202016 104 347
- US-A- 3 898 030
- US-A1- 2003 197 307
- Anonymous: "Mit Multinject-Technologie immer gut beraten - Mehrwert durch mehr Komponenten", , 12 September 2013 (2013-09-12), pages 1-28, XP055981017, Retrieved from the Internet: URL:https://docplayer.org/298591-Mit-multi nject-technologie-immer-gut-beraten-mehrwe rt-durch-mehr-komponenten.html [retrieved on 2022-11-14]

## Beschreibung

Die Erfindung betrifft ein Verfahren und eine Vorrichtung zur Herstellung von mehrkomponentigen Kunststoffformteilen, welches das Kombinieren von dem Spritzgießverfahren, auch als Injection Moulding (IM) bezeichnet, zum Herstellen Grundkörpers aus thermoplastischen Material und dem teilweisen- oder ganzflächigen Überfluten mit einem Reaktivkomponentengemisch, wie beispielsweise Polyurethan (PU), auch als Reactive Injection Moulding (RIM) bezeichnet, in einer reaktionszeitunabhängigen Gesamtzykluszeit ermöglicht.

Das RIM-Verfahren ist in der DE 10 2005 013 975 A1 beschrieben.

Die aufeinanderfolgende Durchführung der beiden Verfahren des Spritzgießens und des RIM-Verfahrens selbst ist bekannt. Durch das Spritzgießen hergestellte Teile zeichnen sich durch hohe Festigkeiten und dem im Verhältnis zum PU günstigen Materialpreis aus. Mit dem PU lassen sich hochwertige und verschleißbeständige Oberflächen herstellen. Beispielsweise lassen sich mit transparentem PU 3D-Effekte auf der Artikeloberfläche abbilden. Durch die Kombination der beiden Verfahren ist es möglich, weit hochwertigere Artikel als im Standardspritzgießverfahren in Großserien herzustellen.

Bekannt ist, dass beide Verfahren räumlich getrennt voneinander durchgeführt werden, um solche Mehr-Komponententeile herzustellen. Das bedeutete, dass die Spritzgussteile innerhalb einer Halle oder eines Geländes oder an einen anderen Ort gebracht werden müssen. Der damit einhergehende logistische Aufwand ist erheblich. Ein Nachteil dabei ist es, dass die Spritzgussteile dabei abkühlen und für den nachfolgenden RIM-Prozess für eine optimale Prozesstemperatur wieder erwärmt werden müssen.

Um den Logistikaufwand für die Fertigung zu minimieren wurden Lösungen entwickelt, die beiden Prozesse in einer Maschine zusammenzuführen. Die Basis dafür ähnelt dem Mehrkomponentenspritzgießen. Dabei wird jedoch das zweite Spritzaggregat durch eine RIM-Anlage ersetzt.

Der Grundkörper (Rohteil) wird im Spritzgießwerkzeug hergestellt. Für das Überfluten wird einer neuer, dem fertigen Artikel oder Bauteil angepasster, Formhohlraum (Kavität) benötigt. Der Prozessablauf lässt sich dabei wie folgt darstellen:
- nach dem Herstellen des Grundkörpers in einer ersten Kavität des Spritzgießwerkzeuges öffnet die Spritzgießmaschine nach entsprechender Kühlzeit
- der Artikel verbleibt in der, dem späteren PU gegenüberliegenden Formseite des Spritzgießwerkzeug
- diese Formseite wird mit dem Rohteil in eine Position gegenüber der RIM-Formseite der zweiten Kavität für das RIM-Verfahren bewegt
- zugleich wird zur Bildung der ersten Kavität des Spritzgießens eine geleerte Formseite angeordnet bzw. bereitgestellt
- die Spritzgießmaschine schließt erneut, so dass sich die Kavitäten für das Spritzgießen und für das RIM-Verfahren bilden
- der Prozessschritt RIM kann nun erfolgen, parallel erfolgt das erneute Füllen der ersten Kavität des Spritzgießwerkzeugs mit Thermoplast
- nach dem Abschluss des Reaktionsprozess und der Kühlzeit öffnet die Spritzgießmaschine
- der Mehr-Komponentenartikel ist fertig und kann entnommen werden und der neue Grundkörper kann in eine Position für das RIM-Verfahren bewegt werden

Für dieses Kombinationsverfahren wird eine spezielle Maschinentechnik benötigt. Entweder kommen Wendeplatten- oder Drehtellermaschinen oder eine Schiebetischvorrichtung zum Einsatz.

Wendeplattenmaschinen sind in den Patenten DE102006024481A1 und EP 2 004 380 B1 beschrieben.

Eine Lösung mit einer Schiebetischvorrichtung ist in der DE 20 2016 104 347 U1 und eine Drehtellervorrichtung ist in der US 2004/00094866 A1 offenbart.

Funktionell bieten diese Lösungen Vorteile. Jedoch ergeben sich aus der relativ langen Reaktionszeit des RIM- Systems, welche teilweise ein Vielfaches der Spritzgusszykluszeit betragen kann, große Gesamtzykluszeiten und damit eine geringe Effizienz der Maschine. Ein weiterer Nachteil sind die viel höheren Investitionskosten für solche Maschinen und die geringe Verfügbarkeit dieser in den kunststoffverarbeitenden Firmen.

Ebenso ist aus der DE 10 2011 117 267 A1 ein Verfahren zum Herstellen von insbesondere spritzgegossenen, beschichteten Formteilen sowie eine Vorrichtung mit einem Schiebetisch zur Durchführung des Verfahrens offenbart.

Die DE 196 50 854 C1 offenbart ein Verfahren und eine Vorrichtung zur Herstellung eines Mehrschichtkunststoffteiles, wobei die Vorrichtung eine drehbare Grundplatte mit zwei Werkzeughälften umfasst.

Die DE 10 2007 051 701 A1 und die US 2003/0197307 A1 offenbaren jeweils ein Verfahren und eine Vorrichtung zur Herstellung mehrkomponentiger Kunststoff-Formteile mit Drehtischtechnik.

Die WO 2006/072366 A1 offenbart ein Verfahren und eine Vorrichtung zum Formen und Beschichten eines Substrats in einem Formwerkzeug mit wenigstens zwei Kavitäten.

Aus der US 3 898 030 A ist eine Spritzgießmaschine mit zwei Spritzgießwerkzeugen bekannt, bei der mit einer Spritzeinheit ein zweiter Gegenstand in einem zweiten Spritzgießwerkzeug hergestellt werden kann, während ein zuvor mit derselben Spritzeinheit gespritzter erster Gegenstand noch in einem ersten Spritzgießwerkzeug aushärtet. An der in der US 3 898 030 A gezeigten Spritzgießmaschine ist ein erstes und zweites Spritzgießwerkzeug vorhanden, jeweils umfassend eine feststehende und eine bewegliche Werkzeughälfte, wobei die feststehende Werkzeughälfte des ersten Spritzgießwerkzeugs benachbart zur feststehenden Werkzeughälfte des zweiten Spritzgießwerkzeugs angeordnet ist. Die bewegliche Werkzeughälfte des ersten Spritzgießwerkzeugs ist mit der beweglichen Werkzeughälfte des zweiten Spritzgießwerkzeugs gleichzeitig schließbar ausgebildet, wobei die Werkzeughälften des ersten Spritzgießwerkzeugs unabhängig vom zweiten Spritzgießwerkzeug miteinander koppelbar ausgebildet sind und die Werkzeughälften des zweiten Spritzgießwerkzeugs unabhängig vom ersten Spritzgießwerkzeug miteinander koppelbar ausgebildet sind. Die beweglichen Werkzeughälften beider Spritzgießwerkzeuge sind zum Öffnen ohne oder mit der beweglichen Werkzeughälfte des jeweils anderen Spritzgießwerkzeugs bewegbar ausgebildet.

Die Aufgabe der vorliegenden Erfindung ist es daher, ein Verfahren und eine Vorrichtung zur Herstellung von mehrkomponentigen Kunststoffformteilen zu schaffen, welche die Verwendung von kostengünstiger, vorhandener oder verbreiteter Maschinentechnik zulassen und die Differenzen in der Zykluszeit der beiden Teilverfahren kompensieren.

Die Lösung dieser Aufgabe erfolgt durch ein Verfahren mit den Merkmalen von Anspruch 1 sowie mit der Vorrichtung mit den Merkmalen des nebengeordneten Anspruches 5 oder 6.

So wird erreicht, dass entsprechend ein, zwei oder mehr RIM-Werkzeuge mit Werkzeughälften in ein Spritzgießsystem integriert werden, welche benachbart zum Spritzgieß-Werkzeug mit Spritzgieß-Kavität oder Spritzgieß-Kavitäten angeordnet sind.

Unter benachbart wird verstanden, dass das RIM-Werkzeug oder die RIM-Werkzeuge jeweils quer oder seitlich rechts und/oder links und/oder oberhalb und/oder unterhalb zum oder am Spritzgieß-Werkzeug angeordnet sind. Somit wird unter benachbart auch eine radiale Anordnung zur Schließrichtung verstanden, welche die angegebenen Richtungen und deren Kombination umfasst. Die jeweilige Trennebene der Werkzeughälften kann in einer Ebene liegen. Die Trennebenen der Werkzeughälften können auch in unterschiedlichen Ebenen liegen. Die jeweiligen beweglichen Werkzeughälften der Werkzeuge bewegen sich beim Schließen jeweils in die gleiche Richtung hin zur jeweils feststehenden Werkzeughälfte der Werkzeuge. Die beschriebene Erfindung ermöglicht die Verwendung einer kunststoffverarbeitenden Standardmaschine, beispielsweise einer Standardspritzgießmaschine mit einem RIM-Werkzeug, insbesondere wenn die Spritzgusszykluszeit bzw. die Prozesszeit des Spritzgießens und die RIM-Zykluszeit bzw. die RIM-Prozesszeit gleich oder annähernd gleich sind und somit die beiden Prozesse im Spritzgießprozess den Rohling und im RIM-Prozess das Bauteil ohne oder mit nur geringen Wartezeiten aufeinanderfolgend einerseits nacheinander und anderseits die unterschiedlichen Prozesse auch zeitgleich in den benachbarten Werkzeugen erfolgen können. Durch die Anordnung der Werkzeuge werden in bzw. an der kunststoffverarbeitenden Standardmaschine kurze Wege insbesondere der Rohlinge erreicht, wodurch die Herstellung effizienter wird.

Die beschriebene Erfindung ermöglicht weiterhin und ebenfalls die Verwendung einer kunststoffverarbeitenden Standardmaschine, beispielsweise einer Standardspritzgießmaschine und durch die Erhöhung der Anzahl an RIM-Werkzeugen eine Steigerung der Effizienz der Maschine. Die für die Effizienz optimale Anzahl errechnet sich aus dem Verhältnis zwischen Spritzgusszykluszeit und RIM-Zykluszeit. Die Erfindung erlaubt einen für die RIM-Zykluszeit unabhängigen Einsatz des Spritzgieß-Werkzeug und des RIM-Werkzeugs, ohne dass es zu Verzögerungen kommt, wenn ein Zyklus auf das Ende des anderen Zyklus zu warten hätte, ohne produktiv zu sein.

Die Erfindung bietet den Vorteil, dass die meist bessere Verfügbarkeit von einfachen 2-Platten-Spritzgießmaschinen bzw. Standardspritzgießmaschinen in Unternehmen genutzt werden kann und lässt damit die Verwendung bzw. Umrüstung von kostengünstiger, vorhandener oder verbreiteter Maschinentechnik zu.

Ein Vorteil dieser Erfindung ist es, dass die Werkzeughälften des Spritzgieß-Werkzeugs nicht mit dem, je nach eingesetzten Komponenten des RIM-Prozesses, für den RIM-Prozess notwendigen Trennmittel in Kontakt kommen. Je nach eingesetzten Komponenten für den RIM-Prozess ist ein Trennmittel erforderlich oder bereits in den Komponenten des RIM-Prozess enthalten. Ist ein Trennmittel erforderlich, kommt es nur auf den vom Spritzgießprozess separaten Werkzeughälften des RIM-Prozesses zum Einsatz. Die störende Belastung des Spritzgieß-Werkzeugs mit dem Trennmittel wird somit vermieden.

Neben dem Einsatz von Reaktivkomponenten wie Polyurethan (PU) für das als Reactive Injection Moulding (RIM) bezeichnete Verfahren lassen sich auch andere Reaktivkomponenten bzw. Reaktivkomponentengemische, die miteinander reagieren, einsetzen.

Eine kunststoffverarbeitende Maschine kann beispielsweise eine Spritzgießmaschine oder eine Presse, welche ein Spritzgieß-Aggregat umfasst, sein.

Im Sinne dieser Beschreibung umfassen RIM-Werkzeuge bzw. das Spritzgieß-Werkzeug Werkzeughälften. Die jeweiligen Kavitäten werden durch Werkzeughälften gebildet.

Unter Rohling wird das im Spritzgieß-Prozess hergestellte Zwischenprodukt verstanden, an welchem der RIM-Prozess noch zu erfolgen hat.

Unter Bauteil oder Mehrkomponentenbauteil oder mehrkomponentiges Bauteil oder Kombiniertes Bauteil wird das durch den Spritzgieß-Prozess und den RIM-Prozesse hergestellte, also in Bezug auf diese Prozesse fertige Produkt verstanden.

Vorteilhafte Weiterentwicklungen und Ausgestaltungen der Erfindung sind in den Unteransprüchen beschrieben.

Indem die jeweiligen sich schließenden oder öffnenden beweglichen Werkzeughälften des jeweiligen RIM-Werkzeugs sich mit der beweglichen Werkzeughälfte des Spritzgieß-Werkzeugs vorzugsweise gleichzeitig bewegen, lässt sich der Prozess dahingehend vereinfachen, dass die jeweiligen bzw. entsprechenden beweglichen Werkzeughälften über die kunststoffverarbeitenden Maschine angetrieben oder bedient werden und ein separater Antrieb für die beweglichen Werkzeughälften des RIM-Werkzeugs nicht erforderlich ist. Die Nutzung bzw. die Erweiterung einer Standardspritzgießmaschine wird dadurch begünstigt bzw. vereinfacht.

Sofern jedoch ein separates Antreiben oder Bedienen der beweglichen Werkzeughälften des jeweiligen RIM-Werkzeugs sich als erforderlich zeigt, lassen sich die Werkzeughälften auch unabhängig von den beweglichen Werkzeughälften des Spritzgieß-Werkzeugs antreiben.

Vorteilhaft verbleiben die beweglichen Werkzeughälften des jeweiligen RIM-Werkzeugs unabhängig von der sich öffnenden beweglichen Werkzeughälfte des Spritzgieß-Werkzeugs an der feststehenden Werkzeughälfte des jeweiligen RIM-Werkzeugs, um den Spritzgießprozess von dem RIM-Prozess bedarfsgerecht zu entkoppeln.

Die jeweiligen beweglichen und feststehenden Werkzeughälften des jeweiligen RIM-Werkzeugs bilden unabhängig von der sich öffnenden beweglichen Werkzeughälfte des Spritzgieß-Werkzeugs die jeweilige RIM-Kavität oder RIM-Kavitäten und halten das jeweilige RIM-Werkzeug geschlossen, indem je nach Prozessschritt die jeweilige bewegliche Werkzeughälfte des jeweiligen RIM-Werkzeugs von der beweglichen Werkzeughälfte des Spritzgieß-Werkzeugs oder von einem anderen konstruktiven Element der kunststoffverarbeitenden Maschine entkoppelt wird.

Als konstruktive Elemente kommen die kraftübertragenden Teile der kunststoffverarbeitenden Maschine in Betracht, welche in der Lage sind die beweglichen Werkzeughälften zu tragen und die für den jeweiligen Prozessablauf bzw. für das Schließen der Werkzeughälften des jeweiligen Werkzeugs notwendige Kraft zu übertragen und Lageänderung vorzunehmen. Dies kann beispielsweise eine Spannplatte oder eine Platte der kunststoffverarbeitenden Maschine sein.

Entsprechend wird die jeweilige bewegliche Werkzeughälfte des jeweiligen RIM-Werkzeugs an die bewegliche Werkzeughälfte des Spritzgieß-Werkzeugs oder an ein anderes konstruktives Element der kunststoffverarbeitenden Maschine gekoppelt, um die bewegliche Werkzeughälfte des RIM-Werkzeuges dem Prozessablauf entsprechend wieder zu öffnen bzw. um die bewegliche Werkzeughälfte entsprechend zu bewegen.

Vorteilhaft erfolgt eine Verriegelung der feststehenden oder beweglichen Werkzeughälften des jeweiligen RIM-Werkzeugs zur Bildung der jeweiligen RIM-Kavitäten, wodurch das anhaltende Wirken eines Antriebs oder der kunststoffverarbeitenden Maschine zum zuverlässigen Schließen der Werkzeughälften des jeweiligen RIM-Werkzeugs entfallen kann und weitere Spritzgießprozesse unabhängig vom RIM-Prozess und der RIM-Werkzeugnutzung fortgesetzt bzw. durchgeführt werden können.

Weiterhin erfolgt vorteilhaft eine Kopplung der jeweiligen beweglichen Werkzeughälfte des jeweiligen RIM-Werkzeugs an der beweglichen Werkzeughälfte des Spritzgieß-Werkzeugs oder an ein anderes konstruktives Element der kunststoffverarbeitenden Maschine in Abhängigkeit der Spritzgusszykluszeit und RIM-Zykluszeit, wodurch die bewegliche Werkzeughälfte des jeweiligen RIM-Werkzeugs ohne eigenen Antrieb bzw. definiert bewegt und das jeweilige RIM-Werkzeug zuverlässig geöffnet wird.

Indem das Bewegen des Rohlings zwischen den und/oder die Entnahme des Bauteils aus den oder das Entleeren der feststehenden oder beweglichen Werkzeughälften automatisiert erfolgt, wird das Verfahren verbessert und die Taktzeiten werden verkürzt. Das Automatisieren kann beispielsweise mittels Roboter oder anderer entsprechend geeigneter Maßnahmen erfolgen.

Vorteilhaft werden die jeweiligen Rohlinge aus einer der Werkzeughälften des Spritzgieß-Werkzeugs in eine der Werkzeughälften des RIM-Werkzeugs eingesetzt, wobei zugleich die fertigen Bauteile aus der jeweils anderen Werkzeughälften des RIM-Werkzeugs entnommen werden, wodurch insbesondere der Wechsel- und Entnahmeprozess weiter begünstigt und der Gesamtprozess verkürzt wird.

Während für den Spritzgießprozess die Kunststoffschmelze wie an sich bekannt über die feststehende Werkzeughälfte des Spritzgieß-Werkzeugs in die Spritzgieß-Kavität gespritzt wird, kann für den RIM-Prozess das Einspritzen des Reaktivkomponentengemisch ebenfalls über die feststehende Werkzeughälfte und je nach Bauteil und Erfordernis gegebenenfalls durch entsprechende Öffnungen im Rohling oder sofern geeignet oder erforderlich über die bewegliche Werkzeughälfte erfolgen.

Indem die feststehende und bewegliche Werkzeughälfte des jeweiligen RIM-Werkzeugs individuell verriegelbar sind, lässt sich der RIM-Prozess unabhängig von Spritzgießprozess durchführen, wodurch der Gesamtprozess effizienter wird. Zudem sind wegen der geringeren Arbeitsdrücke die konstruktiven Anforderungen an die RIM-Werkzeuge bzw. deren Werkzeughälften für den RIM-Prozesses geringer als für den Spritzgießprozess, so dass die Werkzeughälften des RIM-Werkzeugs unabhängig von dem Spritzgieß-Werkzeug verschlossen und verriegelt bzw. aneinander gepresst werden und sein können.

Indem die jeweiligen beweglichen Werkzeughälften des RIM-Werkzeugs mit der beweglichen Werkzeughälfte des Spritzgieß-Werkzeugs oder an ein anderes konstruktives Element der kunststoffverarbeitenden Maschine mittelbar oder unmittelbar koppelbar oder verbindbar oder gekoppelt sind, wird der konstruktive Aufwand verringert. Zudem lassen sich dadurch Standardkunststoffverarbeitenden Maschinen einfach umrüsten und die bereits vorhandenen konstruktiven Elemente nutzen oder mit nur geringem Aufwand erweitern oder anpassen.

In einer Weiterbildung sind die bewegliche Werkzeughälften der RIM-Werkzeuge auf einer oder jeweils einer eigenen oder einer mit der beweglichen Werkzeughälfte des Spritzgieß-Werkzeugs gemeinsamen Spannplatte oder Grundplatte angeordnet. Hierdurch lässt sich der konstruktive Aufwand anpassen bzw. minimieren.

Indem zum Öffnen des jeweiligen RIM-Werkzeugs die bewegliche Werkzeughälfte des RIM-Werkzeugs versetzt oder gleichzeitig mit der beweglichen Werkzeughälfte des Spritzgieß-Werkzeugs bewegbar ist, wird je nach Erfordernis der konstruktive Aufbau und das Verfahren vereinfacht, da einerseits unterschiedliche Antriebe vermieden und die Steuerung und damit das Verfahren vereinfacht werden und anderseits bei einer versetzten Bewegung die Prozesszeiten bzw. Zykluszeiten weiter optimiert werden, indem ein gegebenenfalls notwendiger zeitlicher Versatz in der Ansteuerung der Werkzeughälften ermöglich wird.

Mittels der eigenen Spannplatte wird der konstruktive Aufwand für die Aufnahme und für die Kopplung der jeweiligen Werkzeughälfte des RIM-Werkzeugs verringert.

Mit der gemeinsamen Spannplatte werden insbesondere der Rüstprozess und der Einrichtprozess vereinfacht.

Indem die RIM-Werkzeuge jeweils seitlich und/oder oberhalb oder unterhalb, also radial zum Spritzgieß-Werkzeug versetzt vorgesehen sind, lässt sich der zur Verfügung stehende Raum effizient nutzen und die Entfernung zum Spritzgieß-Werkzeug minimieren. Dabei sind die konstruktiven Besonderheiten und der Aufbau der kunststoffverarbeitenden Maschine zu berücksichtigen. Insbesondere bei einem automatisierten Bewegen der Rohlinge oder der Entnahme des Bauteils ist eine kollisionsfreie Anordnung des RIM-Werkzeugs zueinander und in Bezug zum Spritzgieß-Werkzeug zu berücksichtigen.

Indem als Verriegelung der beweglichen und feststehenden Werkzeughälften des RIM-Werkzeugs ein kraft- und/oder formschlüssige Verrieglung, beispielsweise als ein mechanisch, hydraulisch, pneumatisch oder elektrisch angetriebenes Keilsystem oder beispielsweise eine magnetische Verriegelung vorgesehen ist, lassen sich die individuellen Anforderungen des jeweiligen RIM-Prozesses und des Arbeitsdruckes berücksichtigen und die konstruktiven Aufwendungen vereinfachen.

In einer Weiterbildung ist die bewegliche Werkzeughälfte des zumindest einen RIM-Werkzeugs an der Spannplatte oder Grundplatte lösbar koppelbar, wobei eine kraft- und/oder formschlüssige Kopplung, beispielsweise als eine mechanisch, hydraulisch, pneumatisch oder elektrisch angetriebene Kopplung oder beispielsweise eine magnetische Kopplung vorgesehen ist, wodurch die jeweilige bewegliche Werkzeughälfte nur nach Abschluss des RIM-Prozesses geöffnet wird bzw. für den und während des RIM-Prozesses nicht mit geöffnet wird. Damit werden auch die gegenseitige Unabhängigkeit und die bedarfsgerechte Kopplung der Prozesse begünstigt.

Mehrere Ausführungsbeispiele der Erfindung sind in den beigefügten Zeichnungen dargestellt und werden im Folgenden näher beschrieben. Es zeigen:
Fig. 1 die perspektivische Ansicht einer Spritzgießmaschine mit einem Spritzguss-Werkzeug und zwei RIM-Werkzeugen,
Fig. 2 die schematische Schnittdarstellung einer Spritzgießmaschine mit einem Spritzguss-Werkzeug und zwei RIM-Werkzeugen,
Fig. 3 bis 12 schematische Schnittdarstellung einer Spritzgießmaschine mit einem Spritzguss-Werkzeug und zwei RIM-Werkzeugen in unterschiedlichen Taktzuständen,
Fig. 13 die schematische Schnittdarstellung einer Spritzgießmaschine mit einem Spritzguss-Werkzeug und einem RIM-Werkzeug und
Fig. 14 bis 17 schematische Schnittdarstellung einer Spritzgießmaschine mit einem Spritzguss-Werkzeug und ein RIM-Werkzeug in unterschiedlichen Taktzuständen.

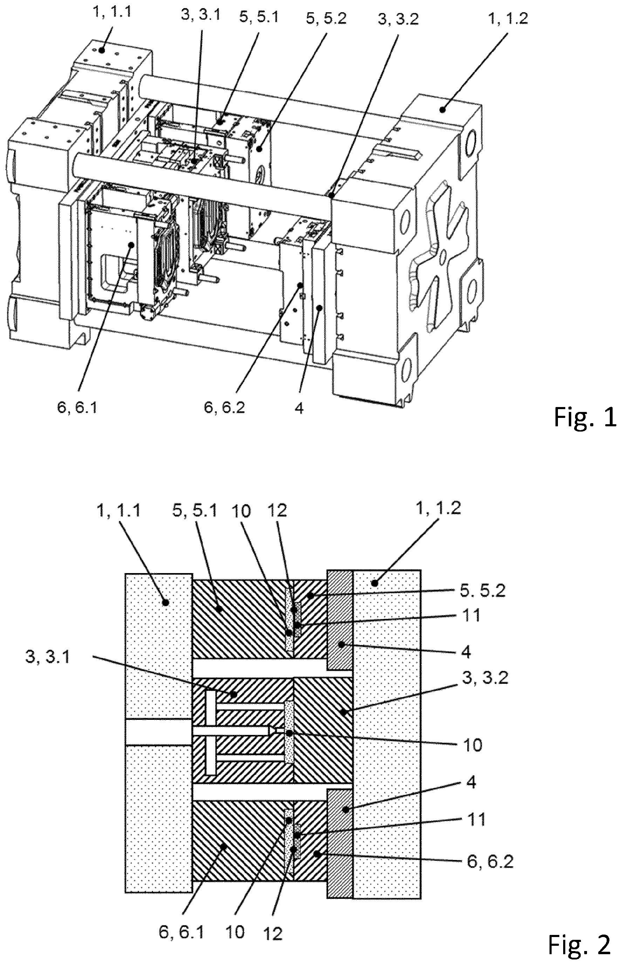

An einer erfindungsgemäßen Vorrichtung zur Herstellung von mehrkomponentigen Kunststoffformteilen ist, wie in Figur 1 dargestellt, an einer kunststoffverarbeitenden Maschine 1 als Spritzgießmaschine 1 ein Spritzgieß-Werkzeug 3 vorhanden.

Die kunststoffverarbeitende Maschine 1 als Spritzgießmaschine 1 umfasst eine feststehende Platte 1.1 und eine bewegliche Platte 1.2, welche als übergeordnete Bewegung an sich bekannt mittels Hydraulikzylindern oder Elektrischem Antrieb oder eines anderen geeigneten Linearantriebes an die feststehende Platte 1.1 bewegbar und pressbar bzw. von dieser wegbewegbar ist und damit zumindest das Spritzgieß-Werkzeug 3, welches eine feststehende Werkzeughälfte 3.1 und eine bewegliche Werkzeughälfte 3.2 umfasst. Die feststehende Werkzeughälfte 3.1 ist an der feststehenden Platte 1.1 und die bewegliche Werkzeughälfte 3.2 ist an der beweglichen Platte 1.2 angeordnet. Die feststehende Werkzeughälfte 3.1 und die bewegliche Werkzeughälfte 3.2 ist zwischen der feststehenden Platte 1.1 und der beweglichen Platte 1.2 angeordnet. Durch das Bewegen der bewegliche Platte 1.2 in Richtung der oder weg von der feststehenden Platte 1.1 wird die bewegliche Werkzeughälfte 3.2 in Richtung der oder weg von der feststehenden Werkzeughälfte 3.1 bewegt, wodurch das Spritzgieß-Werkzeug 3 je nach Prozessschritt sich schließt und öffnet.

Vereinfacht wird jedoch die Bewegung der beweglichen Werkzeughälfte 3.2 des Spritzgieß-Werkzeugs 3 betrachtet.

Eigene oder gemeinsame Spannplatten 4 oder Grundplatten 4 sind insbesondere an der beweglichen Platte 1.2 angeordnet und folgen deren jeweiliger Bewegung. Dies gilt auch für andere konstruktive Elemente der kunststoffverarbeitenden Maschine 1, die insbesondere an der beweglichen Platte 1.2 angeordnet sind.

Weiterhin sind im konkreten Ausführungsbeispiel zwei RIM-Werkzeuge 5, 6 mit jeweils eine bewegliche und eine feststehende Werkzeughälfte 5.1, 5.2, 6.1, 6.2 vorhanden. Die feststehenden Werkzeughälften 5.1, 6.1 der RIM-Werkzeuge 5, 6 sind radial zur Schließrichtung der beweglichen Werkzeughälften 3.2, 5.2, 6.2 benachbart zur feststehenden Werkzeughälfte 3.1 des Spritzgieß-Werkzeugs 3 also zumindest jeweils seitlich beidseits neben der feststehenden Werkzeughälfte 3.1 des Spritzgieß-Werkzeugs 3 angeordnet. Die RIM- Werkzeuge 5, 6 lassen sich ja nach Notwendigkeit jeweils auch oberhalb oder unterhalb zum Spritzgieß-Werkzeug 3 versetzt vorsehen nicht dargestellt.

Entsprechend lassen sich die jeweiligen beweglichen Werkzeughälften 5.2, 6.2 der RIM-Werkzeuge 5, 6 ebenfalls durch die übergeordnete Bewegung der beweglichen Platte 1.2 je nach Prozessschritt zueinander und aneinander bewegen und pressen bzw. voneinander wegbewegen. Vereinfacht wird die je nach Prozessschritt jeweilige bzw. relevante Bewegung der jeweiligen beweglichen Werkzeughälften 5.2, 6.2 der RIM-Werkzeuge 5, 6 sofern zutreffend in Bezug auf die Bewegung der beweglichen Werkzeughälfte 3.2 des Spritzgieß-Werkzeugs 3 betrachtet.

Hierbei sind die beweglichen Werkzeughälften 5.2, 6.2 der RIM-Werkzeuge 5, 6 mit der beweglichen Werkzeughälfte 3.2 des Spritzgieß-Werkzeugs 3 gleichzeitig schließbar ausgebildet sind. Zusätzlich sind die RIM-Werkzeuge 5, 5 unabhängig vom Spritzgieß-Werkzeug 3 verriegelbar ausgebildet, so dass einerseits das jeweilige der RIM-Werkzeuge 5, 6 unabhängig von der Stellung des Spritzgieß-Werkzeugs 3 bzw. dessen beweglichen Werkzeughälfte 3.2 verschlossen ist und bleibt und die bewegliche Werkzeughälfte 3.2 des Spritzgieß-Werkzeugs 3 zum Öffnen ohne oder mit zumindest einer der beweglichen Werkzeughälften 5.2, 6.2 der RIM-Werkzeuge 5, 6 bewegt.

So wird erreicht, dass je nach Prozessschritt und der mit dem jeweiligen RIM-Prozessschritt gegenüber dem Spritzgießprozess verbundenen zeitlichen Verzögerung das Spritzgieß-Werkzeug 3 allein oder und zumindest eine der beweglichen Werkzeughälften 5.2, 6.2 der RIM-Werkzeuge 5, 6 bewegt werden können, sofern es der jeweilige RIM-Prozessschritt es ermöglicht oder erfordert. Hierfür sind die feststehenden und beweglichen Werkzeughälften 5.1, 5.2, 6.1, 6.2 der jeweiligen RIM-Werkzeuge 5, 6 individuell verriegelbar, so dass einerseits die feststehenden und beweglichen Werkzeughälften 5.1, 5.2, 6.1, 6.2 sich miteinander oder aneinander verriegeln lassen und damit unabhängig vom Spritzgießprozess auch verriegelt und die jeweilige RIM-Kavität für den RIM-Prozessschritt geschlossen bleiben.

Als Verriegelung 13 in der Trennebene der beweglichen und feststehenden Werkzeughälften 5.1, 5.2, 6.1, 6.2 der jeweiligen RIM-Werkzeuge 5, 6 kommen je nach den jeweiligen Prozessbedingen elektrische, mechanische, hydraulische, pneumatische oder eine magnetische Verriegelung 13 in Betracht, welche die beweglichen und feststehenden Werkzeughälften 5.1, 5.2, 6.1, 6.2 bedarfsgerecht verriegeln und zuverlässig die Kräfte beim RIM-Prozess aufnehmen, welche durch den Fülldruck und die Fläche der Kavität entstehen und die entsprechenden beweglichen und feststehenden Werkzeughälften 5.1, 5.2, 6.1, 6.2 geschlossen halten. Die Verriegelung 13 oder das Verriegelungssystem der feststehenden und beweglichen Werkzeughälften 5.1, 5.2, 6.1, 6.2 der RIM-Werkzeuge 5, 6 Formteilung lässt sich mittels eines mechanisch angetriebenen Keilsystems oder eines hydraulisch angetriebenen Keilsystems oder eines pneumatisch angetriebenen Keilsystems oder eines elektrisch angetriebenen Keilsystems oder mittels Elektromagneten umsetzen.

Es ist vorgesehen, dass die jeweiligen beweglichen Werkzeughälften 5.2, 6.2 der RIM-Werkzeuge 5, 6 mit der beweglichen Werkzeughälfte 3.2 des Spritzgieß-Werkzeugs 3 gekoppelt sind, so dass die jeweiligen beweglichen Werkzeughälften 5.2, 6.2 der RIM-Werkzeuge 5, 6 je nach Prozessschritt gemeinsam mit beweglichen Werkzeughälfte 3.2 des Spritzgieß-Werkzeugs 3 zum Öffnen und Schließen bewegt werden können. Je nach Aufbau der kunststoffverarbeitenden Maschine 1 lassen sich die jeweiligen beweglichen Werkzeughälften 5.2, 6.2 der RIM-Werkzeuge 5, 6 auch an einem anderen konstruktiven Element der kunststoffverarbeitenden Maschine 1, welche das jeweilige Öffnen und Schließen ermöglicht, koppeln. Die Kopplung 14 der jeweiligen beweglichen Werkzeughälften 5.2, 6.2 der RIM-Werkzeuge 5, 6 mit der beweglichen Werkzeughälfte 3.2 des Spritzgieß-Werkzeugs 3 lässt sich dabei mittelbar, beispielsweise an eine Spannplatte 4 oder Grundplatte 4 oder unmittelbar aneinander ausführen.

Die jeweilige bewegliche Werkzeughälfte 5.2, 6.2 der jeweiligen RIM- Werkzeuge 5, 6 ist an der jeweiligen Spannplatte 4 oder Grundplatte 4 lösbar mit einer mechanischen, hydraulischen, pneumatischen oder elektrisch angetriebene Kopplung 14 oder mit einet magnetische Kopplung 14 gekoppelt, wobei hierbei das zuverlässige Öffnen der jeweiligen RIM- Werkzeuge 5, 6 und eine definierte Lage der geöffneten jeweiligen bewegliche Werkzeughälfte 5.2, 6.2 der jeweiligen RIM- Werkzeuge 5, 6 zu berücksichtigen sind.

Eine Kopplung 14 der jeweiligen beweglichen Werkzeughälfte 5.2, 6.2 der jeweiligen RIM-Werkzeuge 5, 6 mit der beweglichen Werkzeughälfte 3.2 des Spritzgieß-Werkzeugs 3 ist ebenfalls mit einer mechanischen, hydraulischen, pneumatischen oder elektrisch angetriebene Kopplung 14 oder mit einet magnetische Kopplung 14 möglich. Das Kopplungssystem 14 für das Koppeln und Entkoppeln der beweglichen Werkzeughälfte 5.2, 6.2 auf der jeweiligen Spannplatte 4 kann mit einem mechanischen System, einem hydraulisch angetriebenen System, einem pneumatisch angetriebenen System, einem elektrisch angetriebenen System oder mit einem Elektromagnet betätigt oder ausgeführt werden.

Die Vorrichtung vereinfachend sind die jeweiligen beweglichen Werkzeughälften 5.2, 6.2 der RIM-Werkzeuge 5, 6 auf einer mit der beweglichen Werkzeughälfte 3.2 des Spritzgieß-Werkzeugs 3 gemeinsamen Spannplatte 4 oder Grundplatte 4 angeordnet, so dass die jeweilige Verriegelung 13 in der Trennebene der Werkzeughälfte 5.1, 5.2, 6.1, 6.2 des RIM-Werkzeugs 5, 6 und das entsprechende Lösen dieser Verriegelung 13 je nach Prozessschritt an und mit der Spannplatte 4 oder Grundplatte 4 realisiert ist.

Vorgesehen sind jedoch auch für die die jeweiligen beweglichen Werkzeughälften 5.2, 6.2 der RIM-Werkzeuge 5, 6 eigene Spannplatten 4 an der kunststoffverarbeitenden Maschine 1 angeordnet sind nicht dargestellt.

Je nach Notwendigkeit ist vorgesehen, dass zum Öffnen des jeweiligen RIM-Werkzeugs 5, 6 die bewegliche Werkzeughälfte 5.2, 6.2 des RIM-Werkzeugs 5, 6 versetzt oder gleichzeitig mit der beweglichen Werkzeughälfte 3.2 des Spritzgieß-Werkzeugs 3, beispielsweise über einen entsprechenden zusätzlichen Antrieb nicht dargestellt bewegbar ausgebildet ist, um die jeweilige bewegliche Werkzeughälfte 5.2, 6.2 des RIM-Werkzeugs 5, 6 zeitlich versetzt zu öffnen. Die jeweilige bewegliche Werkzeughälfte 5.2, 6.2 des RIM-Werkzeugs 5, 6 ist dafür entsprechend der konkreten Anordnung an der beweglichen Werkzeughälfte 3.2 des Spritzgieß-Werkzeugs 3 oder an einer eigenen oder der gemeinsamen Spannplatte 4 oder Grundplatte 4 individuell bewegbar.

Die schematische Darstellung in Figur 2 zeigt eine kunststoffverarbeitenden Maschine 1 in der ein Spritzgießwerkzeug 3 vorhanden ist, an welchem eine auf die jeweiligen Zykluszeiten abgestimmte Anzahl von baugleichen RIM- Werkzeugen 5, 6 angeordnet sind. An den RIM-Werkzeuge 5, 6 sind jeweils Verriegelungen 13 oder Verriegelungssysteme 13 in der Trennebene der RIM-Werkzeughälfte 5.1, 5.2, 6.1, 6.2 vorhanden, um bei geöffneter Spritzgießmaschine 1 und damit geöffnetem Spritzgießwerkzeug 3 die jeweiligen RIM-Werkzeuge 5, 6 bzw. die Formtrennebene sicher zu verschließen. Dabei muss das jeweilige Verriegelungssystem 13 die Kräfte aufnehmen, welche durch den Fülldruck und die Fläche der Kavität entstehen. Die jeweiligen eigenen Spannplatten 4 der RIM-Werkzeuge 5, 6 sind fest mit der beweglichen Platte 1.2 der Spritzgießmaschine 1 verbunden. Diese Spannplatten 4 haben die Aufgabe eine Seite des Kopplungssystems 14 aufzunehmen. Jedes RIM-Werkzeug 5, 6 kann eine eigene Spannplatte 4 besitzen. Für einen vereinfachten Rüst- und Einrichtvorgang ist es von Vorteil, wenn das Spritzgießwerkzeug 3 und die RIM-Werkzeuge 5, 6 eine gemeinsame Spannplatte 4 besitzen. Das Kopplungssystem 14 ermöglicht die Kopplung 14 der beweglichen Werkzeughälften 5.2, 6.2 der jeweiligen RIM-Werkzeuge 5, 6 mit der jeweiligen Spannplatte 4 zumindest zum Öffnen, um die eine Seite der RIM-Werkzeuge 5, 6, also die beweglichen Werkzeughälften 5.2, 6.2 je nach Prozessschritt auf der Spannplatte 4 zu halten oder zu lösen, je nachdem, ob das RIM-Werkzeug 5, 6 geschlossen zu bleiben hat oder für die Entnahme des fertigen Bauteils 12 und das Einlegen des nächsten Rohlings 10 zu öffnen ist oder offen zu bleiben hat.

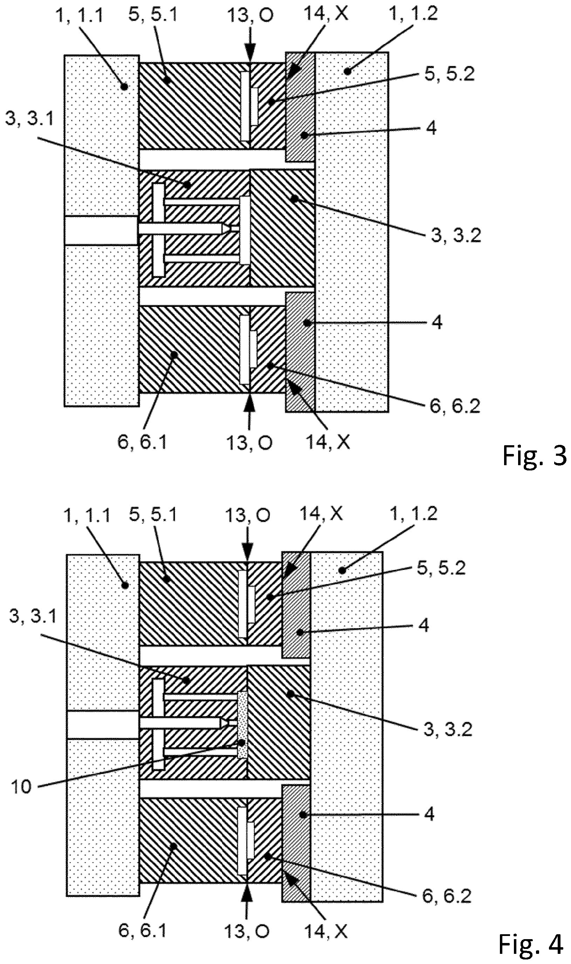

Das erfindungsgemäße Verfahren zur Herstellung von mehrkomponentigen Kunststoffformteilen, wobei an einer kunststoffverarbeitenden Maschine 1 als Spritzgießmaschine 1 in ein Spritzgieß-Werkzeug 3, umfassend eine feststehende Werkzeughälfte 3.1 und eine bewegliche Werkzeughälfte 3.2, Kunststoffschmelze 10 für einen Rohling 10 eingespritzt wird und anschließend an oder um den Rohling 10 in einem RIM-Werkzeug 5, 6, umfassend eine feststehende Werkzeughälfte 5.1, 6.1 und eine bewegliche Werkzeughälfte 5.2, 6.2, ein Reaktivkomponentengemisch 11 eingespritzt wird, sieht vor, dass, wie Figur 3 dargestellt, in einem ersten Takt die Werkzeuge 3, 5, 6 geschlossen sind und im Spritzgieß-Werkzeug 3 ein Spritzgießvorgang als beispielsweise erster Spritzgießvorgang des Rohlings 10 erfolgt, wie dies Figur 4 dargestellt ist. Hierbei sind die Verriegelungen 13 der feststehenden und der beweglichen Werkzeughälften 5.1, 5.2, 6.1, 6.2 inaktiv O. Die Kopplung 14 in der Trennebene der Werkzeughälfte 5.2, 6.2 zur jeweiligen Spannplatte 4 ist aktiv X.

Das Schließen des Spritzgieß-Werkzeugs 3 mit der feststehenden Werkzeughälfte 3.1 und beweglichen Werkzeughälfte 3.2 sowie der jeweiligen RIM-Werkzeuge 5, 6 mit den feststehenden Werkzeughälfte 5.1, 6.1 und den beweglichen Werkzeughälften 5.2, 6.2 geht mit einem Schließen der kunststoffverarbeitenden Maschine 1 als Spritzgießmaschine 1 durch ein Bewegen der beweglichen Platte 1.2 in Richtung der feststehende Platte 1.1 der Spritzgießmaschine 1 einher.

Neben dem Schließen geht zumindest das Öffnen des Spritzgieß-Werkzeugs 3 mit dem Öffnen der kunststoffverarbeitenden Maschine 1 als Spritzgießmaschine 1 durch ein Bewegen der bewegliche Platte 1.2 weg von der feststehende Platte 1.1 der Spritzgießmaschine 1 und damit mit dem Bewegen der beweglichen Werkzeughälfte 3.2 weg von der feststehenden Werkzeughälfte 3.1 einher.

Je nach Prozessverlauf lassen sich zusätzlich zum Spritzgieß-Werkzeug 3 die RIM-Werkzeuge 5, 6 durch das jeweilige Bewegen der beweglichen Werkzeughälfte 5.2, 6.2 individuell und zumindest entsprechend der Bewegung der beweglichen Platte 1.2 der Spritzgießmaschine 1 und/oder der Bewegung der beweglichen Werkzeughälfte 3.2 des Spritzgieß-Werkzeugs 3 bewegen.

Vereinfachend wird jedoch Bezug auf das Öffnen und Schließen des Spritzgieß-Werkzeugs 3 bzw. die Bewegung der beweglichen Werkzeughälfte 3.2 genommen, wobei darunter auch verstanden wird, dass die kunststoffverarbeitenden Maschine 1 als Spritzgießmaschine 1 ebenfalls sich öffnet oder schließt bzw. die bewegliche Platte 1.2 zum Öffnen oder Schließen bewegt wird.

Die jeweiligen sich schließenden oder öffnenden beweglichen Werkzeughälften 5.2, 6.2 des jeweiligen RIM-Werkzeugs 5, 6 bewegen sich je nach Prozessschritt oder Takt entsprechend der beweglichen Werkzeughälfte 3.2 des Spritzgieß-Werkzeugs 3. Je nach Prozessschritt und Takt sowie Prozessdauer verbleiben die beweglichen Werkzeughälften 5.2, 6.2 des jeweiligen RIM-Werkzeugs 5, 6 unabhängig von der sich öffnenden beweglichen Werkzeughälfte 3.2 des Spritzgieß-Werkzeugs 3 an der feststehenden Werkzeughälfte 5.1, 6.1 des jeweiligen RIM-Werkzeugs 5, 6.

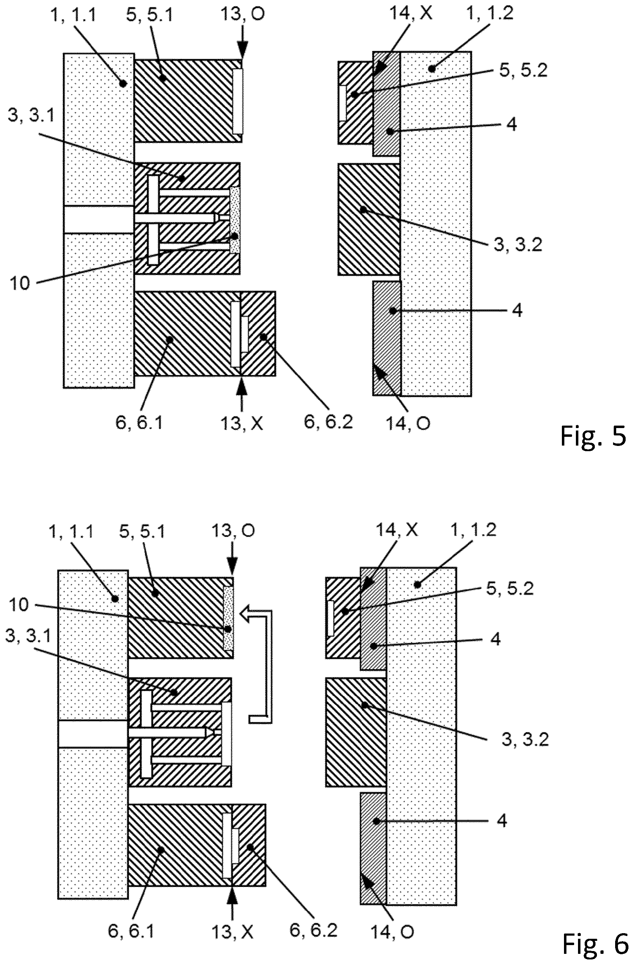

In einem zweiten Takt werden, wie in Figur 5 dargestellt, nach erfolgtem Spritzgießvorgang das Spritzgieß-Werkzeug 3 und ein erstes RIM-Werkzeug 5 durch Bewegen der jeweiligen beweglichen Werkzeughälften 3.2, 5.2 geöffnet und es erfolgt hierbei eine Formteilung, die Verriegelung 13 der feststehenden und der beweglichen Werkzeughälften 5.1, 5.2 ist inaktiv O. Die Kopplung 14 in der Trennebene der Werkzeughälfte 5.2 zur jeweiligen Spannplatte 4 ist weiterhin aktiv X. Das zweite RIM-Werkzeug 6 bleibt geschlossen, wobei die Verriegelung 13 der feststehenden und der beweglichen Werkzeughälften 6.1, 6.2 aktiv X ist und die Kopplung 14 in der Trennebene der Werkzeughälfte 6.2 zur jeweiligen Spannplatte 4 inaktiv O ist, die bewegliche Werkzeughälften 6.2 von der Spannplatte 4 oder Grundplatte entkoppelt ist.

Der Rohling 10 als Spritzgießteil wird, wie in Figur 6 dargestellt, von der feststehenden Werkzeughälfte 3.1 des Spritzgieß-Werkzeug 3 in die feststehenden Werkzeughälfte 5.1 des ersten RIM-Werkzeugs 5 transferiert, also beispielsweise von der feststehenden Werkzeughälfte 3.1 des Spritzgieß-Werkzeug 3 entnommen und in die feststehenden Werkzeughälfte 5.1 eingelegt. Es ist auch möglich, dass das Spritzgießteil von der feststehenden Werkzeughälfte 3.1 des Spritzgieß-Werkzeugs 3 in die bewegliche Werkzeughälfte 5.2 des ersten RIM-Werkzeugs 5 transferiert wird.

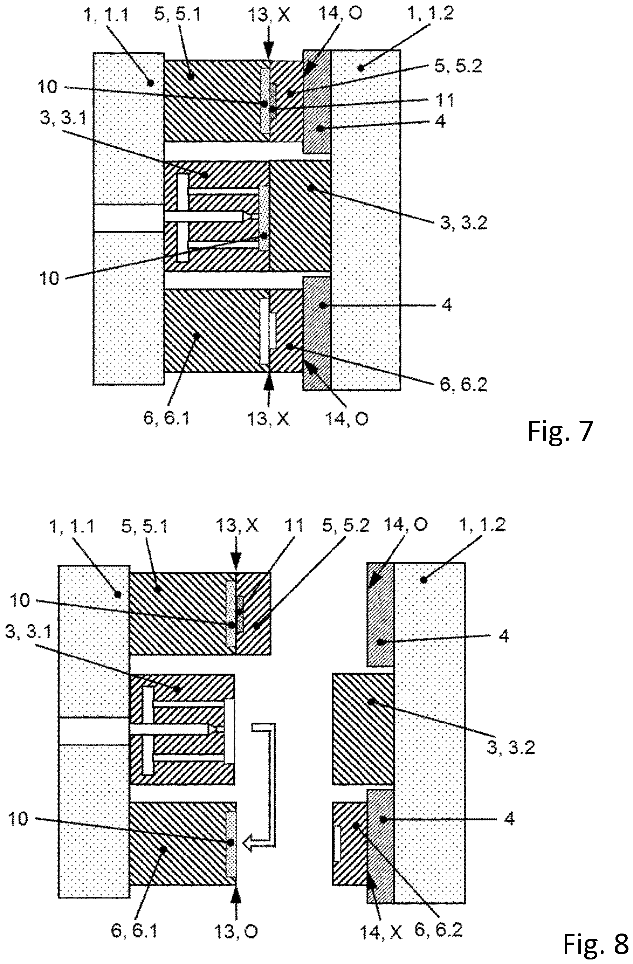

Danach schließt in einem dritten Takt das Spritzgieß-Werkzeug 3 und das erste RIM-Werkzeug 5 durch Bewegen der jeweiligen beweglichen Werkzeughälften 3.2, 5.2. Im Spritzgieß-Werkzeug 3 erfolgt, wie in Figur 7 dargestellt, der Spritzgießvorgang eines Rohlings 10 als zweiter Spritzgießvorgang. Der RIM- Prozess für ein kombiniertes Bauteil 12 erfolgt in dem ersten RIM-Werkzeug 5. Die Verriegelung 13 der feststehenden und der beweglichen Werkzeughälften 5.1, 5.2 ist aktiv X. Die Kopplung 14 in der Trennebene der Werkzeughälfte 5.2 zur jeweiligen Spannplatte 4 ist inaktiv O. Das zweite RIM-Werkzeug 6 bleibt geschlossen, wobei die Verriegelungen 13 der feststehenden und der beweglichen Werkzeughälften 6.1, 6.2 aktiv X ist und die Kopplung 14 in der Trennebene der Werkzeughälfte 6.2 zur jeweiligen Spannplatte 4 inaktiv O ist, die bewegliche Werkzeughälften 6.2 von der Spannplatte 4 oder Grundplatte 4 entkoppelt ist.

In einem vierten Takt werden, wie in Figur 8 dargestellt, das Spritzgieß-Werkzeug 3 und ein zweites RIM-Werkzeug 6 durch das Bewegen der jeweiligen beweglichen Werkzeughälften 3.2, 6.2 weg von den feststehenden Werkzeughälften 3.1, 6.1 geöffnet. Die Verriegelung 13 der feststehenden und der beweglichen Werkzeughälften 6.1, 6.2 ist inaktiv O und die Kopplung 14 in der Trennebene der Werkzeughälfte 6.2 zur jeweiligen Spannplatte 4 aktiv X ist, so dass die bewegliche Werkzeughälften 6.2 an die Spannplatte 4 oder Grundplatte 4 gekoppelt ist.

Währenddessen bleibt, wie in Figur 8 dargestellt, das erste RIM-Werkzeug 5 für den noch andauernden RIM-Prozess geschlossen. Die Verriegelung 13 der feststehenden und der beweglichen Werkzeughälften 5.1, 5.2 ist aktiv X. Die Kopplung 14 in der Trennebene der Werkzeughälfte 5.2 zur jeweiligen Spannplatte 4 ist inaktiv O, so dass die bewegliche Werkzeughälften 5.2 von der Spannplatte 4 oder Grundplatte 4 entkoppelt ist.

Der Rohling 10 wird, wie in Figur 8 dargestellt, von der feststehenden oder beweglichen Werkzeughälfte 3,1, 3.2 des Spritzgieß-Werkzeugs 3 in die leere oder entleerte feststehende oder bewegliche Werkzeughälfte 6.1, 6.2 des zweiten RIM-Werkzeugs 6 automatisiert transferiert.

Sofern bereits eine Wiederholung der Takte als kontinuierlicher Prozess erfolgt, ist die feststehende oder bewegliche Werkzeughälfte 6.1, 6.2 des zweiten RIM-Werkzeugs 6 gegebenenfalls nicht leer. Daher ist es entsprechend vorgesehen, dass im Bedarfsfalle zuvor zum Entleeren eine Entnahme des fertigen Bauteils 12 aus der feststehenden oder beweglichen Werkzeughälfte 6.1, 6.2 des zweiten oder weiteren RIM-Werkzeugs 6 automatisiert erfolgt und damit die feststehende oder bewegliche Werkzeughälfte 6.1, 6.2 entleert ist und anschließend der Rohling 10 in die entleerte feststehende Werkzeughälfte 6.1 eingesetzt wird.

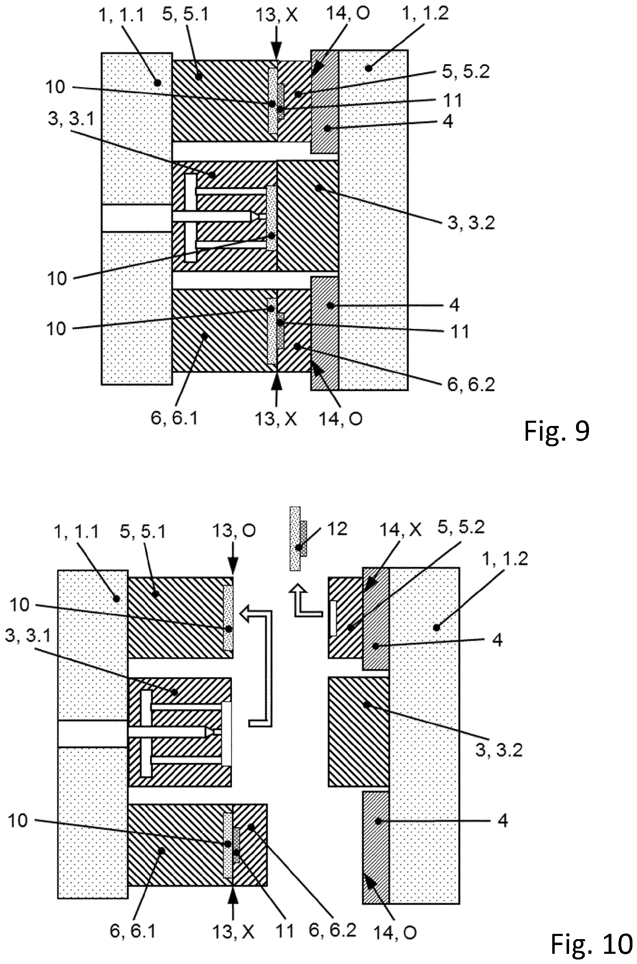

Im einem fünften Takt werden, wie in Figur 9 dargestellt, das Spritzgieß-Werkzeug 3 und das zweite RIM- Werkzeug 6 durch Bewegen der beweglichen Werkzeughälfte 6.2 geschlossen. Der Spritzgießvorgang als dritter Spritzgießvorgang erfolgt nun im Spritzgieß-Werkzeug 3 und ein neuer RIM- Prozess erfolgt in dem zweiten RIM-Werkzeug 6. Die Verriegelung 13 der feststehenden und der beweglichen Werkzeughälften 6.1, 6.2 ist dafür aktiv x und die Kopplung 14 in der Trennebene der Werkzeughälfte 6.2 zur jeweiligen Spannplatte 4 ist inaktiv o, so dass die bewegliche Werkzeughälften 6.2 von der Spannplatte 4 oder Grundplatte 4 entkoppelt ist.

Währenddessen bleibt, wie in Figur 9 dargestellt, das erste RIM-Werkzeug 5 für den noch andauernden RIM-Prozess geschlossen. Die Verriegelung 13 der feststehenden und der beweglichen Werkzeughälften 5.1, 5.2 ist aktiv X. Die Kopplung 14 in der Trennebene der Werkzeughälfte 5.2 zur jeweiligen Spannplatte 4 ist inaktiv O, so dass die bewegliche Werkzeughälften 5.2 von der Spannplatte 4 oder Grundplatte 4 entkoppelt ist.

In beiden RIM-Werkzeugen 5, 6 läuft nun jeweils ein RIM-Prozess ab. Die Abfolge der Takte bildet ein Zyklus, der kontinuierlich ablaufen kann.

In einen sechsten Takt werden, wie in Figur 10 dargestellt, das Spritzgieß-Werkzeug 3 und das erste RIM-Werkzeug 5 durch Bewegen der jeweiligen beweglichen Werkzeughälften 3.2, 5.2 geöffnet. Die Verriegelung 13 der feststehenden und der beweglichen Werkzeughälften 5.1, 5.2 ist inaktiv O und die Kopplung 14 in der Trennebene der Werkzeughälfte 5.2 zur jeweiligen Spannplatte 4 ist aktiv X, so dass die bewegliche Werkzeughälften 5.2 an die Spannplatte 4 oder Grundplatte 4 gekoppelt ist.

Währenddessen bleibt, wie in Figur 10 dargestellt, das zweite RIM-Werkzeug 6 für den noch andauernden RIM-Prozess geschlossen. Die Verriegelung 13 der feststehenden und der beweglichen Werkzeughälften 6.1, 6.2 ist aktiv X. Die Kopplung 14 in der Trennebene der Werkzeughälfte 6.2 zur jeweiligen Spannplatte 4 ist inaktiv O, so dass die bewegliche Werkzeughälften 6.2 von der Spannplatte 4 oder Grundplatte 4 entkoppelt ist.

Der Rohling 10 wird, wie in Figur 10 dargestellt, beispielsweise von der feststehenden Werkzeughälfte 3.1 des Spritzgieß-Werkzeugs 3 in die leere oder entleerte feststehende Werkzeughälfte 5.1 des ersten RIM-Werkzeugs 5 automatisiert transferiert, wobei zudem das erste fertige Bauteil 12 dieses Zyklus aus der beweglichen Werkzeughälfte 5.2 des ersten RIM-Werkzeugs 5 automatisiert entnommen wird.

Vorteilhaft ist vorgesehen, dass das Einsetzen des Rohling 10 aus der feststehenden oder beweglichen Werkzeughälfte 3,1, 3.2 des Spritzgieß-Werkzeugs 3 in die jeweils freie bewegliche oder feststehende Werkzeughälfte 5.1, 5.2, 6.1, 6.2 eines der RIM-Werkzeuge 5, 6 erfolgt, während das Entleeren bzw. die Entnahme des fertigen Bauteils 12 aus der jeweils anderen Werkzeughälfte 5.1, 5.2, 6.1, 6.2 dieses RIM-Werkzeugs 5, 6 erfolgt, so dass das Transferien und die Entnahmen automatisiert simultan erfolgen können, wir dies beispielhaft in Figur 10 dargestellt ist.

Dieser Ablauf widerholt sich als Zyklus ab dem dritten Takt.

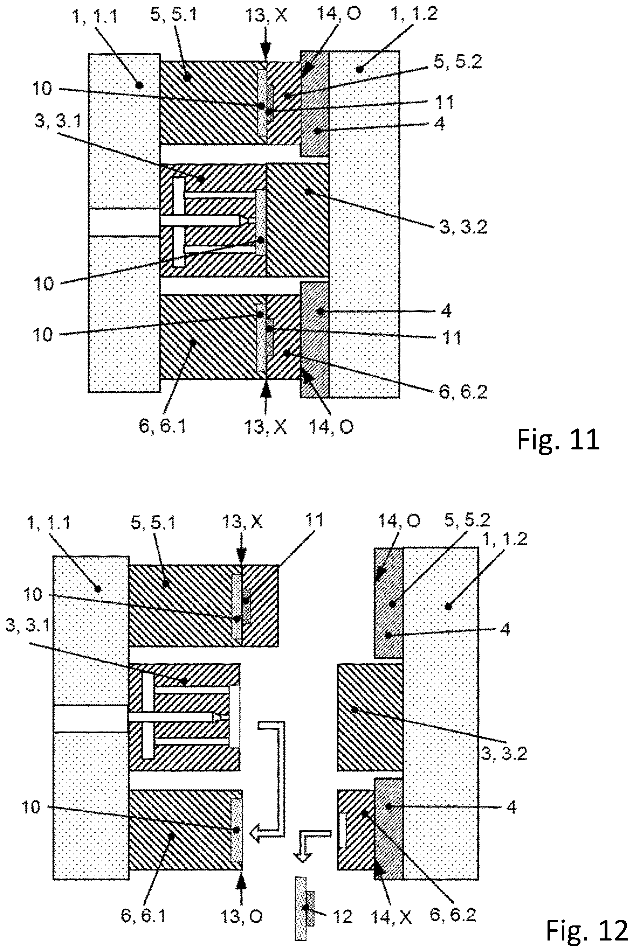

So schließt sich entsprechend des dritten Taktes das Spritzgieß-Werkzeug 3 und das erste RIM-Werkzeug 5 durch Bewegen der jeweiligen beweglichen Werkzeughälften 3.2, 5.2. Im Spritzgieß-Werkzeug 3 erfolgt, wie in Figur 11 dargestellt, der Spritzgießvorgang eines Rohlings 10 als vierter Spritzgießvorgang. Der RIM- Prozess für ein kombiniertes Bauteil 12 erfolgt in dem ersten RIM-Werkzeug 5. Das zweite RIM-Werkzeug 6 bleibt geschlossen, wobei die Verriegelungen 13 der feststehenden und der beweglichen Werkzeughälften 6.1, 6.2 aktiv X ist und die Kopplung 14 in der Trennebene der Werkzeughälfte 6.2 zur jeweiligen Spannplatte 4 inaktiv O ist, die bewegliche Werkzeughälften 6.2 von der Spannplatte 4 oder Grundplatte 4 entkoppelt ist. Die Verriegelung, Entriegelung, Kopplung bzw. Entkopplung der beiden RIM-Werkzeuge 5, 6 ist hierbei wie oben zu Figur 7 bzw. zum dritten Takt beschrieben.

In Figur 12 ist entsprechend des vierten Taktes dargestellt, dass das Spritzgieß-Werkzeug 3 und das zweite RIM-Werkzeug 6 durch Bewegen der jeweiligen beweglichen Werkzeughälften 3.2, 6.2 geöffnet werden, während das erste RIM-Werkzeug 5 geschlossen bleibt und der Rohling 10 von der feststehenden Werkzeughälfte 3,1, des Spritzgieß-Werkzeugs 3 in die leere oder entleerte feststehende Werkzeughälfte 6.1, 6.2 des zweiten RIM-Werkzeugs 6 automatisiert transferiert wird. Das fertige Bauteil 12 wird hier beispielsweise aus der beweglichen Werkzeughälfte 6.2 des zweiten RIM-Werkzeugs 6 automatisiert entnommen. Die Verriegelung, Entriegelung, Kopplung bzw. Entkopplung der beiden RIM-Werkzeuge 5, 6 ist hierbei wie oben zu Figur 8 bzw. zum vierten Takt beschrieben.

Daran anschließend folgen die Takte 5 und 6 sowie weiter in Fortsetzung als Zyklus fortlaufend die Takte 3 bis 6.

Die jeweilige Verriegelung der feststehenden und beweglichen Werkzeughälften 5.1, 5.2, 6.1, 6.2 des jeweiligen RIM-Werkzeugs 5, 6 sowie die Kopplung der jeweiligen beweglichen Werkzeughälften 5.2, 6.2 des jeweiligen RIM-Werkzeugs 5, 6 an der beweglichen Werkzeughälfte 3.2 des Spritzgieß-Werkzeugs 3 oder an einem anderen konstruktiven Element der kunststoffverarbeitenden Maschine 1, wie eine eigene Spannplatte 4 oder eine gemeinsame Spannplatte 4 an der beweglichen Werkzeughälfte 3.2 des Spritzgieß-Werkzeugs 3 erfolgt jeweils in Abhängigkeit der Spritzgusszykluszeit und RIM-Zykluszeit, so dass eine angepasste Ansteuerung für eine synchrone Bewegung der jeweils betroffenen beweglichen Werkzeughälften 3.2, 5.2, 6.2 ermöglicht wird.

Der Transfer des mittels Spritzguss hergestellten Rohlings 10 aus dem Spritzgießwerkzeug 3 in die RIM-Werkzeuge 5, 6 und die Entnahme des fertigen Bauteils 12 aus den jeweiligen RIM-Werkzeugen 5, 6 kann entweder manuell oder automatisiert erfolgen.

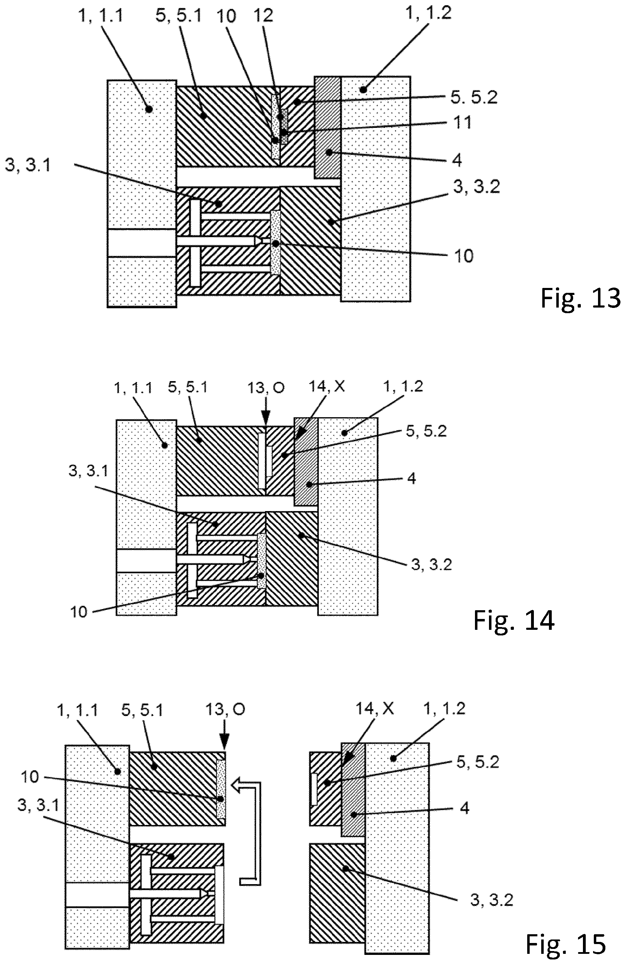

In Figur 13 ist eine kunststoffverarbeitende Maschine 1 dargestellt, in der ein Spritzgießwerkzeug 3 vorhanden ist, an welchem ein RIM- Werkzeug 5 angeordnet ist. An dem RIM-Werkzeug 5 ist jeweils eine Verriegelung 13 oder ein Verriegelungssystem 13 in der Trennebene der RIM-Werkzeughälfte 5.1, 5.2 vorhanden, um bei geöffneter Spritzgießmaschine 1 und damit geöffnetem Spritzgießwerkzeug 3 das RIM-Werkzeug 5 bzw. die Formtrennebene im Bedarfsfalle sicher zu verschließen. Ist ein individuelles Verschließen des RIM-Werkzeugs 5 bzw. der Formtrennebene nicht erforderlich, kann auf die Verriegelung 13 oder das Verriegelungssystem 13 verzichtet werden, da hierdurch der konstruktive Aufwand beim Einsatz nur eines RIM-Werkzeugs 5 verringert wird. Sofern ein Verriegelungssystem 13 vorhanden ist, muss es die Kräfte aufnehmen, welche durch den Fülldruck und die Fläche der Kavität entstehen. Die Spannplatte 4 des RIM-Werkzeugs 5 ist fest mit der beweglichen Platte 1.2 der Spritzgießmaschine 1 verbunden. Diese Spannplatte 4 hat auch hier die Aufgabe eine Seite des gegebenenfalls vorhandenen Kopplungssystems 14 aufzunehmen. Das RIM-Werkzeug 5 kann eine eigene Spannplatte 4 besitzen. Für einen vereinfachten Rüst- und Einrichtvorgang ist es von Vorteil, wenn das Spritzgießwerkzeug 3 und das RIM-Werkzeug 5 eine gemeinsame Spannplatte 4 besitzen. Das gegebenenfalls vorhandene Kopplungssystem 14 ermöglicht die Kopplung 14 der beweglichen Werkzeughälfte 5.2 des RIM-Werkzeugs 5 mit der Spannplatte 4 zumindest zum Öffnen, um die eine Seite des RIM-Werkzeugs 5, 6, also die beweglichen Werkzeughälfte 5.2 je nach Prozessschritt auf der Spannplatte 4 zu halten oder zu lösen, je nachdem, ob das RIM-Werkzeug 5 gegebenenfalls geschlossen zu bleiben hat oder für die Entnahme des fertigen Bauteils 12 und das Einlegen des nächsten Rohlings 10 zu öffnen ist oder offen zu bleiben hat.

Ein Verfahren sieht in einer vereinfachten nicht erfindungsgemäßen Alternative vor, dass zur Herstellung von mehrkomponentigen Kunststoffformteilen an einer erfindungsgemäßen kunststoffverarbeitenden Maschine 1 als Spritzgießmaschine 1 in ein Spritzgieß-Werkzeug 3, umfassend eine feststehende Werkzeughälfte 3.1 und eine bewegliche Werkzeughälfte 3.2, Kunststoffschmelze 10 für einen Rohling 10 eingespritzt wird und anschließend an oder um den Rohling 10 in einem RIM-Werkzeug 5 umfassend eine feststehende Werkzeughälfte 5.1 und eine bewegliche Werkzeughälfte 5.2 ein Reaktivkomponentengemisch 11 eingespritzt wird, wobei in einem ersten Takt die Werkzeuge 3, 5 geschlossen sind und im Spritzgieß-Werkzeug 3 ein Spritzgießvorgang als beispielsweise erster Spritzgießvorgang des Rohlings 10 erfolgt, wie dies Figur 14 dargestellt ist. Hierbei sind die Verriegelungen 13 der feststehenden und der beweglichen Werkzeughälften 5.1, 5.2 inaktiv O. Die Kopplung 14 in der Trennebene der Werkzeughälfte 5.2, 6.2 zur jeweiligen Spannplatte 4 ist aktiv X.

In einem zweiten Takt werden, wie in Figur 15 dargestellt, nach erfolgtem Spritzgießvorgang das Spritzgieß-Werkzeug 3 und ein erstes RIM-Werkzeug 5 durch Bewegen der jeweiligen beweglichen Werkzeughälften 3.2, 5.2 geöffnet und es erfolgt hierbei eine Formteilung, die Verriegelungen 13 der feststehenden und der beweglichen Werkzeughälften 5.1, 5.2 ist inaktiv O. Die Kopplung 14 in der Trennebene der Werkzeughälfte 5.2, 6.2 zur jeweiligen Spannplatte 4 ist aktiv X.

Der Rohling 10 als Spritzgießteil wird, wie in Figur 15 dargestellt, von der feststehenden Werkzeughälfte 3.1 des Spritzgieß-Werkzeug 3 in die feststehenden Werkzeughälfte 5.1 des RIM-Werkzeugs 5 transferiert, also beispielsweise von der feststehenden Werkzeughälfte 3.1 des Spritzgieß-Werkzeug 3 entnommen und in die feststehenden Werkzeughälfte 5.1 eingelegt. Es ist auch möglich, dass das Spritzgießteil von der feststehenden Werkzeughälfte 3.1 des Spritzgieß-Werkzeugs 3 in die bewegliche Werkzeughälfte 5.2 des RIM-Werkzeugs 5 transferiert wird.

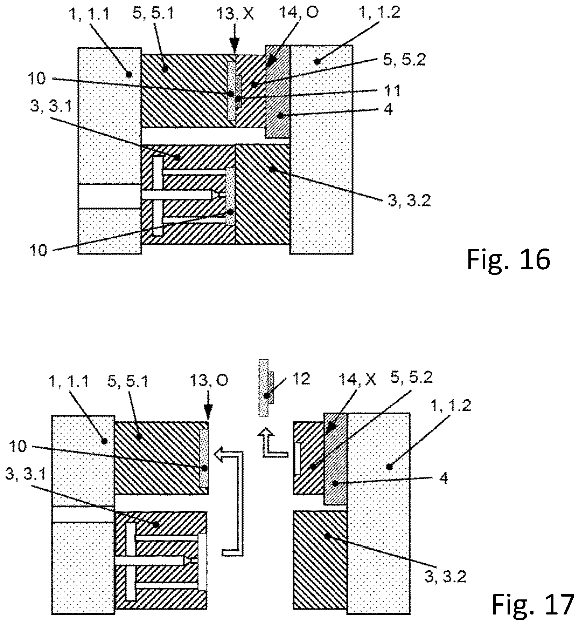

Danach schließt in einem dritten Takt das Spritzgieß-Werkzeug 3 und das RIM-Werkzeug 5 durch Bewegen der beweglichen Werkzeughälften 3.2, 5.2. Im Spritzgieß-Werkzeug 3 erfolgt, wie in Figur 16 dargestellt, der Spritzgießvorgang eines Rohlings 10 als zweiter Spritzgießvorgang. Der RIM- Prozess für ein kombiniertes Bauteil 12 erfolgt in dem RIM-Werkzeug 5. Die Verriegelung 13 der feststehenden und der beweglichen Werkzeughälften 5.1, 5.2 ist aktiv X. Die Kopplung 14 in der Trennebene der Werkzeughälfte 5.2 zur jeweiligen Spannplatte 4 ist inaktiv O, kann jedoch auch aktiv X bleiben.

In einen vierten Takt werden, wie in Figur 17 dargestellt, das Spritzgieß-Werkzeug 3 und das RIM-Werkzeug 5 durch Bewegen der jeweiligen beweglichen Werkzeughälften 3.2, 5.2 geöffnet. Die Verriegelung 13 der feststehenden und der beweglichen Werkzeughälften 5.1, 5.2 ist inaktiv O und die Kopplung 14 in der Trennebene der Werkzeughälfte 5.2 zur jeweiligen Spannplatte 4 ist aktiv X, so dass die bewegliche Werkzeughälften 5.2 an die Spannplatte 4 oder Grundplatte 4 gekoppelt ist.

Der Rohling 10 wird, wie in Figur 17 dargestellt, beispielsweise von der feststehenden Werkzeughälfte 3.1 des Spritzgieß-Werkzeugs 3 in die leere oder entleerte feststehende Werkzeughälfte 5.1 des ersten RIM-Werkzeugs 5 automatisiert transferiert, wobei zudem das erste fertige Bauteil 12 dieses Zyklus aus der beweglichen Werkzeughälfte 5.2 des RIM-Werkzeugs 5 automatisiert entnommen wird.

Vorteilhaft ist ebenfalls vorgesehen, dass das Einsetzen des Rohling 10 aus der feststehenden oder beweglichen Werkzeughälfte 3,1, 3.2 des Spritzgieß-Werkzeugs 3 in die jeweils freie bewegliche oder feststehende Werkzeughälfte 5.1, 5.2 des RIM-Werkzeugs 5 erfolgt, während das Entleeren bzw. die Entnahme des fertigen Bauteils 12 aus der jeweils anderen Werkzeughälfte 5.1, 5.2, des RIM-Werkzeugs 5 erfolgt, so dass das Transferien und die Entnahmen automatisiert simultan erfolgen können, wir dies beispielhaft in Figur 17 dargestellt ist.

Dieser Ablauf widerholt sich als Zyklus ab dritten Takt.

So schließt sich entsprechend des dritten Taktes das Spritzgieß-Werkzeug 3 und das RIM-Werkzeug 5 durch Bewegen der jeweiligen beweglichen Werkzeughälften 3.2, 5.2. Im Spritzgieß-Werkzeug 3 erfolgt, wie in Figur 16 dargestellt, der Spritzgießvorgang eines Rohlings 10 als vierter Spritzgießvorgang. Der RIM- Prozess für ein kombiniertes Bauteil 12 erfolgt in dem RIM-Werkzeug 5.

### Zusammenstellung der Bezugszeichen

- 1 -: kunststoffverarbeitenden Maschine, Spritzgießmaschine
- 1.1 -: feststehende Platte der Spritzgießmaschine
- 1.2 -: bewegliche Platte der Spritzgießmaschine
- 3 -: Spritzgieß-Werkzeug
- 3.1 -: feststehende Werkzeughälfte des Spritzgieß-Werkzeugs
- 3.2 -: bewegliche Werkzeughälfte des Spritzgieß-Werkzeugs
- 4 -: Spannplatte, Grundplatte
- 5 -: RIM-Werkzeug, erstes RIM-Werkzeug, weiteres RIM-Werkzeug
- 5.1 -: RIM-Werkzeug, feststehende Werkzeughälfte erstes RIM-Werkzeug
- 5.2 -: RIM-Werkzeug, bewegliche Werkzeughälfte erstes RIM-Werkzeug
- 6 -: RIM-Werkzeug, zweites RIM-Werkzeug, weiteres RIM-Werkzeug
- 6.1 -: RIM-Werkzeug, feststehende Werkzeughälfte zweites RIM-Werkzeug
- 6.2 -: RIM-Werkzeug, bewegliche Werkzeughälfte zweites RIM-Werkzeug

- 10 -: Thermoplast-Komponente, Kunststoffschmelze, Rohling
- 11 -: RIM-Komponente, Reaktivkomponentengemisch, Polyurethan
- 12 -: kombiniertes Bauteil, Bauteil
- 13 -: Verriegelung in der Trennebene der RIM-Werkzeughälfte, Verriegelungssystem
- 14 -: Kopplung in der Trennebene RIM-Werkzeughälfte-Spannplatte, Kopplungssystem

- X -: Verriegelung aktiv, Kopplung aktiv
- O -: Verriegelung inaktiv, Kopplung inaktiv

## Patentansprüche

1. Verfahren zur Herstellung von mehrkomponentigen Kunststoffformteilen, wobei in einer kunststoffverarbeitenden Maschine (1) in ein Spritzgieß-Werkzeug (3), umfassend eine feststehende Werkzeughälfte (3.1) und eine bewegliche Werkzeughälfte (3.2), Kunststoffschmelze (10) für einen Rohling (10) eingespritzt wird und anschließend an oder um den Rohling (10) in einem an der kunststoffverarbeitenden Maschine (1) angeordneten RIM-Werkzeug (5, 6), umfassend eine feststehende Werkzeughälfte (5.1, 6.2) und eine bewegliche Werkzeughälfte (5.2, 6.2), ein Reaktivkomponentengemisch (11) eingespritzt wird,
**dadurch gekennzeichnet,**
- **dass** in einem ersten Takt die Werkzeuge (3, 5, 6) geschlossen sind und im Spritzgieß-Werkzeug (3) ein Spritzgießvorgang zur Herstellung eines ersten Rohlings (10) erfolgt,
- **dass** in einem zweiten Takt das Spritzgieß-Werkzeug (3) und ein erstes RIM-Werkzeug (5) durch Bewegen der jeweiligen beweglichen Werkzeughälften (3.2, 5.2) geöffnet werden, während zumindest ein zweites oder weiteres RIM-Werkzeug (6) geschlossen bleibt und der erste Rohling (10) von der feststehenden oder beweglichen Werkzeughälfte (3.1, 3.2) des Spritzgieß-Werkzeugs (3) in die feststehende oder bewegliche Werkzeughälfte (5.1, 5.2) des ersten RIM-Werkzeugs (5) transferiert wird,
- **dass** in einem dritten Takt das Spritzgieß-Werkzeug (3) und das erste oder ein weiteres RIM-Werkzeug (5) durch Bewegen der jeweiligen beweglichen Werkzeughälften (3.2, 5.2) geschlossen werden und ein weiterer Spritzgießvorgang in dem Spritzgieß-Werkzeug (3) zur Herstellung eines zweiten oder weiteren Rohlings (10) und ein RIM- Prozess in dem ersten oder weiteren RIM-Werkzeug (5) zur Weiterbearbeitung des ersten Rohlings (10) zum/zu einem fertigen Bauteil (12) erfolgen,
- **dass** in einem vierten Takt das Spritzgieß-Werkzeug (3) und das zweite oder weitere RIM-Werkzeug (6) durch Bewegen der jeweiligen beweglichen Werkzeughälften (3.2, 6.2) geöffnet werden, während zumindest das erste oder weitere RIM-Werkzeug (5) geschlossen bleibt und der zweite Rohling (10a) von der feststehenden oder beweglichen Werkzeughälfte (3,1, 3.2) des Spritzgieß-Werkzeugs (3) in die leere oder entleerte feststehende oder bewegliche Werkzeughälfte (6.1, 6.2) des zweiten oder weiteren RIM-Werkzeugs (6) transferiert wird, wobei zum Entleeren eine Entnahme des fertigen Bauteils (12) aus der feststehenden oder beweglichen Werkzeughälfte (6.1, 6.2) des zweiten oder weiteren RIM-Werkzeugs (6) erfolgt,
- **dass** in einem fünften Takt das Spritzgieß-Werkzeug (3) und das zweite oder weitere RIM-Werkzeug (6) durch Bewegen der jeweiligen beweglichen Werkzeughälften (3.2, 6.2) geschlossen werden und der Spritzgießvorgang im Spritzgieß-Werkzeug (3) zur Herstellung eines dritten Rohlings (10) und ein RIM- Prozess in dem zweiten oder weiteren RIM-Werkzeug (6) zur Weiterbearbeitung des zweiten Rohlings (10b) zum/zu einem fertigen Bauteil (12) erfolgen,
- **dass** in einen sechsten Takt das Spritzgieß-Werkzeug (3) und das erste oder ein weiteres RIM-Werkzeug (5) durch Bewegen der jeweiligen beweglichen Werkzeughälften (3.2, 5.2) geöffnet werden, während das zweite oder weitere RIM-Werkzeug (6) geschlossen bleibt und der dritte Rohling (10) von der feststehenden oder beweglichen Werkzeughälfte (3.1, 3.2) des Spritzgieß-Werkzeugs (3) in die leere oder entleerte feststehende oder bewegliche Werkzeughälfte (5.1, 5.2) des ersten oder eines noch weiteren RIM-Werkzeugs (5) transferiert wird, wobei zum Entleeren eine Entnahme des fertigen Bauteils (12) aus der feststehenden oder beweglichen Werkzeughälfte (5.1, 5.2) des ersten oder weiteren RIM-Werkzeugs (5) erfolgt,
- und **dass** sich anschließend der Ablauf als Zyklus ab dritten Takt wiederholt.

2. Verfahren nach Anspruch 1,
**dadurch gekennzeichnet,**
**dass** die jeweiligen sich schließenden oder öffnenden beweglichen Werkzeughälften (5.2, 6.2) des jeweiligen RIM-Werkzeugs (5, 6) sich mit der beweglichen Werkzeughälfte (3.2) des Spritzgieß-Werkzeugs (3) bewegen und/oder dass die beweglichen Werkzeughälften (5.2, 6.2) des jeweiligen RIM-Werkzeugs (5, 6) unabhängig von der sich öffnenden beweglichen Werkzeughälfte (3.2) des Spritzgieß-Werkzeugs (3) an der feststehenden Werkzeughälfte (5.1, 6.1) des jeweiligen RIM-Werkzeugs (5, 6) verbleiben.

3. Verfahren nach einem der Ansprüche 1 und 2,
**dadurch gekennzeichnet,**
**dass** eine Verriegelung der feststehenden und beweglichen Werkzeughälften (5.1, 5.2, 6.1, 6.2) des jeweiligen RIM-Werkzeugs (5, 6) und/oder eine Kopplung der jeweiligen beweglichen Werkzeughälften (5.2, 6.2) des jeweiligen RIM-Werkzeugs (5, 6) an der beweglichen Werkzeughälfte (3.2) des Spritzgieß-Werkzeugs (3) oder an einem anderen konstruktiven Element der kunststoffverarbeitenden Maschine (1) in Abhängigkeit der Spritzgusszykluszeit und RIM-Zykluszeit erfolgt.

4. Verfahren nach einem der Ansprüche 1 bis 3,
**dadurch gekennzeichnet,**
**dass** das Bewegen oder transferieren des Rohlings (10) zwischen den und/oder das Entleeren der feststehenden oder beweglichen Werkzeughälften (3.1, 3.2, 5.1, 5.2, 6.1, 6.2) automatisiert erfolgt.

5. Vorrichtung zur Herstellung von mehrkomponentigen Kunststoffformteilen, wobei an einer kunststoffverarbeitenden Maschine (1) ein Spritzgieß-Werkzeug (3), umfassend eine feststehende und eine bewegliche Werkzeughälfte (3.1, 3.2), und ein RIM-Werkzeug (5), jeweils umfassend eine bewegliche und eine feststehende Werkzeughälfte (5.1, 5.2), vorhanden ist, wobei die feststehende Werkzeughälfte (5.1) des RIM-Werkzeugs (5) zur feststehenden Werkzeughälfte (3.1) des Spritzgieß-Werkzeugs (3) radial zur Schließrichtung der beweglichen Werkzeughälften (3.2, 5.2) benachbart angeordnet sind,
**dadurch gekennzeichnet,**
**dass** die bewegliche Werkzeughälfte (5.2) des RIM-Werkzeugs (5) mit der beweglichen Werkzeughälfte (3.2) des Spritzgieß-Werkzeugs (3) gleichzeitig schließbar ausgebildet sind, wobei die RIM-Werkzeughälften (5.1, 5.2) unabhängig vom Spritzgieß-Werkzeug (3) miteinander verriegelbar ausgebildet sind und die bewegliche Werkzeughälfte (3.2) des Spritzgieß-Werkzeugs (3) zum Öffnen ohne oder mit der beweglichen Werkzeughälfte (5.2) des RIM-Werkzeugs (5) bewegbar ausgebildet ist.

6. Vorrichtung zur Herstellung von mehrkomponentigen Kunststoffformteilen, wobei an einer kunststoffverarbeitenden Maschine (1) ein Spritzgieß-Werkzeug (3), umfassend eine feststehende und eine bewegliche Werkzeughälfte (3.1, 3.2), und zumindest zwei RIM-Werkzeuge (5, 6), jeweils umfassend eine bewegliche und eine feststehende Werkzeughälfte (5.1, 5.2, 6.1, 6.2), vorhanden sind, wobei die feststehenden Werkzeughälften (5.1, 6.1) der RIM-Werkzeuge (5, 6) zur feststehenden Werkzeughälfte (3.1) des Spritzgieß-Werkzeugs (3) radial zur Schließrichtung der beweglichen Werkzeughälften (3.2, 5.2, 6.2) benachbart angeordnet sind,
**dadurch gekennzeichnet,**
**dass** die beweglichen Werkzeughälften (5.2, 6.2) der RIM-Werkzeuge (5, 6) mit der beweglichen Werkzeughälfte (3.2) des Spritzgieß-Werkzeugs (3) gleichzeitig schließbar ausgebildet sind, wobei die RIM-Werkzeughälften (5.1, 5.2, 6.1, 6.2) unabhängig vom Spritzgieß-Werkzeug (3) miteinander verriegelbar ausgebildet sind und die bewegliche Werkzeughälfte (3.2) des Spritzgieß-Werkzeugs (3) zum Öffnen ohne oder mit zumindest einer der beweglichen Werkzeughälften (5.2, 6.2) der RIM-Werkzeuge (5, 6) bewegbar ausgebildet ist.

7. Vorrichtung nach einem der Ansprüche 5 und 6,
**dadurch gekennzeichnet,**
**dass** die feststehenden und beweglichen Werkzeughälften (5.1, 5.2, 6.1, 6.2) der jeweiligen RIM-Werkzeuge (5, 6) individuell verriegelbar ausgebildet sind.

8. Vorrichtung nach einem der Ansprüche 5 bis 7,
**dadurch gekennzeichnet,**
**dass** die jeweiligen beweglichen Werkzeughälften (5.2, 6.2) der RIM-Werkzeuge (5, 6) mit der beweglichen Werkzeughälfte (3.2) des Spritzgieß-Werkzeugs (3) oder mit einem anderen konstruktiven Element der kunststoffverarbeitenden Maschine (1) mittelbar oder unmittelbar koppelbar oder verbindbar ausgebildet oder gekoppelt sind.

9. Vorrichtung nach einem der Ansprüche 5 bis 8,
**dadurch gekennzeichnet,**
**dass** die jeweiligen beweglichen Werkzeughälften (5.2, 6.2) der RIM-Werkzeuge (5, 6) auf einer oder jeweils einer eigenen oder einer mit der beweglichen Werkzeughälfte (3.2) des Spritzgieß-Werkzeugs (3) gemeinsamen Spannplatte (4) oder Grundplatte (4) angeordnet sind.

10. Vorrichtung nach einem der Ansprüche 5 bis 9,
**dadurch gekennzeichnet,**
**dass** zum Öffnen des jeweiligen RIM-Werkzeugs (5, 6) die bewegliche Werkzeughälfte (5.2, 6.2) des RIM-Werkzeugs (5, 6) versetzt oder gleichzeitig mit der beweglichen Werkzeughälfte (3.2) des Spritzgieß-Werkzeugs (3) und/oder mittels der oder den eigenen oder der gemeinsamen Spannplatte (4) oder Grundplatte (4) bewegbar ausgebildet ist.

11. Vorrichtung nach einem der Ansprüche 5 bis 10,
**dadurch gekennzeichnet,**
**dass** das RIM- Werkzeug (5) oder die RIM- Werkzeuge (5, 6) jeweils seitlich und/oder oberhalb und/oder unterhalb zum Spritzgieß-Werkzeug (3) versetzt vorgesehen sind.

12. Vorrichtung nach einem der Ansprüche 5 bis 11,
**dadurch gekennzeichnet,**
**dass** als Verriegelung der beweglichen und feststehenden Werkzeughälften (5.1, 5.2, 6.1, 6.2) der jeweiligen RIM-Werkzeuge (5, 6) eine kraft- und/oder formschlüssige Verrieglung, beispielsweise als ein mechanisch, hydraulisch, pneumatisch oder elektrisch angetriebenes Keilsystem oder eine magnetische Verriegelung vorgesehen ist.

13. Vorrichtung nach einem der Ansprüche 5 bis 12,
**dadurch gekennzeichnet,**
**dass** die bewegliche Werkzeughälfte (5.2, 6.2) der jeweiligen RIM- Werkzeuge (5, 6) an der jeweiligen Spannplatte (4) oder Grundplatte (4) lösbar koppelbar ausgebildet ist, wobei eine kraft- und/oder formschlüssige Kopplung, beispielsweise als eine mechanisch, hydraulisch, pneumatisch oder elektrisch angetriebene Kopplung oder eine magnetische Kopplung vorgesehen ist.

## Claims

1. Method for producing multi-component plastic mouldings, wherein in a plastic-processing machine (1) polymer melt (10) for a moulded piece (10) is injected into an injection mould (3) comprising a stationary mould half (3.1) and a movable mould half (3.2). 2), polymer melt (10) for a moulded piece (10) is injected and subsequently a reactive component mixture (11) is injected on or around the moulded piece (10) in a RIM mould (5, 6) arranged on the plastic-processing machine (1), comprising a stationary mould half (5.1, 6.2) and a movable mould half (5.2, 6.2),
**characterised in**
- **that** in a first cycle, the moulds (3, 5, 6) are closed and an injection moulding process for producing a first moulded piece (10) takes place in the injection mould (3),
- **that** in a second cycle the injection mould (3) and a first RIM mould (5) are opened by moving the respective movable mould halves (3.2, 5. 2), while at least a second or further RIM mould (6) remains closed and the first moulded piece (10) is transferred from the stationary or movable mould half (3.1, 3.2) of the injection mould (3) into the stationary or movable mould half (5.1, 5.2) of the first RIM mould (5),
- **that** in a third cycle, the injection mould (3) and the first or a further RIM mould (5) are closed by moving the respective movable mould halves (3.2, 5.2) and a further injection moulding process takes place in the injection mould (3) to produce a second or further moulded piece (10) and a RIM process takes place in the first or further RIM mould (5) for further processing of the first moulded piece (10) to form a finished component (12),
- **that** in a fourth cycle, the injection mould (3) and the second or further RIM mould (6) are opened by moving the respective movable mould halves (3.2, 6.2), while at least the first or further RIM mould (5) remains closed and the second moulded piece (10a) is removed from the stationary or movable mould half (3.1, 3.2) of the injection mould (3.1, 3.2) of the injection mould (3) into the empty or emptied stationary or movable mould half (6.1, 6.2) of the second or further RIM mould (6), wherein for emptying a removal of the finished component (12) from the stationary or movable mould half (6.1, 6.2) of the second or further RIM mould (6) takes place,
- **that** in a fifth cycle, the injection mould (3) and the second or further RIM mould (6) are closed by moving the respective movable mould halves (3.2, 6.2) and the injection moulding process in the injection mould (3) for producing a third moulded piece (10) and a RIM process in the second or further RIM mould (6) for further processing of the second moulded piece (10b) to form a finished component (12) take place,
- **that** in a sixth cycle, the injection mould (3) and the first or a further RIM mould (5) are opened by moving the respective movable mould halves (3.2, 5.2), while the second or further RIM mould (6) remains closed and the third moulded piece (10) is removed from the stationary or movable mould half (3.1, 3.2) of the injection mould (3). 2) of the injection mould (3) into the empty or emptied stationary or movable mould half (5.1, 5.2) of the first or a still further RIM mould (5), wherein for emptying a removal of the finished component (12) from the stationary or movable mould half (5.1, 5.2) of the first or further RIM mould (5) takes place,
- and **that** the sequence is then repeated as a cycle starting from the third cycle.

2. Method according to claim 1,
**characterised in**
**that** the respective closing or opening movable mould halves (5.2, 6.2) of the respective RIM mould (5, 6) move with the movable mould half (3.2) of the injection mould (3) and/or in that the movable mould halves (5. 2, 6.2) of the respective RIM mould (5, 6) remain on the stationary mould half (5.1, 6.1) of the respective RIM mould (5, 6) independently of the opening movable mould half (3.2) of the injection mould (3).

3. Method according to one of the claims 1 and 2,
**characterised in**
**that** an interlocking of the stationary and movable mould halves (5.1, 5.2, 6.1, 6.2) of the respective RIM mould (5, 6) and/or a coupling of the respective movable mould halves (5.2, 6. 2) of the respective RIM mould (5, 6) to the movable mould half (3.2) of the injection mould (3) or to another structural element of the plastic-processing machine (1) takes place as a function of the injection moulding cycle time and RIM cycle time.

4. Method according to one of the claims 1 to 3,
**characterised in**
**that** the moving or transferring of the moulded piece (10) between and/or the emptying of the stationary or movable mould halves (3.1, 3.2, 5.1, 5.2, 6.1, 6.2) is automated.

5. Apparatus for producing multi-component plastic mouldings, wherein an injection mould (3), comprising a stationary and a movable mould half (3.1, 3.2), and a RIM mould (5), each comprising a movable and a stationary mould half (5.1, 5.2), are present on a plastic-processing machine (5.1, 5.2), whereby the stationary mould half (5.1) of the RIM mould (5) is arranged adjacent to the stationary mould half (3.1) of the injection mould (3) radially to the closing direction of the movable mould halves (3.2, 5.2),
**characterised in**
**that** the movable mould half (5.2) of the RIM mould (5) is designed to be closed simultaneously with the movable mould half (3.2) of the injection mould (3), wherein the RIM mould halves (5.1, 5.2) are designed to be lockable to one another independently of the injection mould (3) and the movable mould half (3.2) of the injection mould (3) is designed to be movable for opening without or with the movable mould half (5.2) of the RIM mould (5).

6. Apparatus for producing multi-component plastic mouldings, wherein, on a plastic-processing machine (1), an injection mould (3), comprising a stationary and a movable mould half (3.1, 3.2), and at least two RIM moulds (5, 6), each comprising a movable and a stationary mould half (5. 1, 5.2, 6.1, 6.2), are present, wherein the stationary tool halves (5.1, 6.1) of the RIM moulds (5, 6) are arranged adjacent to the stationary mould half (3.1) of the injection mould (3) radially to the closing direction of the movable tool halves (3.2, 5.2, 6.2),
**characterised in**
**that** the movable mould halves (5.2, 6.2) of the RIM moulds (5, 6) are designed to be closed simultaneously with the movable mould half (3.2) of the injection mould (3), whereby the RIM mould halves (5.1, 5.2, 6.1, 6.2) are designed to be lockable to one another independently of the injection mould (3) and the movable mould half (3.2) of the injection mould (3) is designed to be movable for opening without or with at least one of the movable mould halves (5.2, 6.2) of the RIM moulds (5, 6).

7. Apparatus according to one of the claims 5 and 6,
**characterised in**
**that** the stationary and movable tool halves (5.1, 5.2, 6.1, 6.2) of the respective RIM moulds (5, 6) are designed to be individually lockable.

8. Apparatus according to one of the claims 5 to 7,
**characterised in**
**that** the respective movable tool halves (5.2, 6.2) of the RIM moulds (5, 6) are designed or coupled directly or indirectly to the movable mould half (3.2) of the injection mould (3) or to another structural element of the plastic-processing machine (1) to be coupled or connected.

9. Apparatus according to one of the claims 5 to 8,
**characterised in**
**that** the respective movable mould halves (5.2, 6.2) of the RIM moulds (5, 6) are arranged on or in each case on their own clamping plate (4) or a base plate (4) common to the movable mould half (3.2) of the injection mould (3).

10. Apparatus according to one of the claims 5 to 9,
**characterised in**
**that**, for opening the respective RIM mould (5, 6), the movable mould half (5.2, 6.2) of the RIM mould (5, 6) is designed to be moved offset or simultaneously with the movable mould half (3.2) of the injection mould (3) and/or by means of its own or the common clamping plate (4) or base plate (4).

11. Apparatus according to one of the claims 5 to 10,
**characterised in**
**that** the RIM mould (5) or the RIM moulds (5, 6) are each provided offset laterally and/or above and/or below the injection mould (3).

12. Apparatus according to one of the claims 5 to 11,
**characterised in**
**that** a non-positive and/or positive locking, for example as a mechanically, hydraulically, pneumatically or electrically driven wedge system or a magnetic locking, is provided as locking of the movable and stationary tool halves (5.1, 5.2, 6.1, 6.2) of the respective RIM moulds (5, 6).

13. Apparatus according to one of the claims 5 to 12,
**characterised in**
**that** the movable mould half (5.2, 6.2) of the respective RIM moulds (5, 6) is designed to be detachably coupled to the respective clamping plate (4) or base plate (4), wherin a non-positive and/or positive coupling is provided, for example as a mechanically, hydraulically, pneumatically or electrically driven coupling, or a magnetic coupling.

## Revendications

1. Procédé de fabrication de pièces moulées en plastique multicomposants selon lequel de la matière plastique en fusion (10) est injectée dans un outil de moulage par injection (3) d'une machine de transformation des matières plastiques (1), comprenant une moitié d'outil fixe (3.1) et une moitié d'outil mobile (3.2), en vue de produire une ébauche (10) et ensuite un mélange de composants réactifs (11) est injecté dans un outil MIR (5, 6) agencé sur la machine de transformation des matières plastiques (1), comprenant une moitié d'outil fixe (5.1, 6.2) et une moitié d'outil mobile (5.2, 6.2), en vue de l'appliquer sur ou autour de l'ébauche (10),
**caractérisé en ce que**
- au cours d'un premier cycle, les outils (3, 5, 6) sont fermés et une opération de moulage par injection est effectuée dans l'outil de moulage par injection (3) en vue de produire une première ébauche (10),
- au cours d'un deuxième cycle, l'outil de moulage par injection (3) et un premier outil MIR (5) sont ouverts par le déplacement des moitiés d'outil fixes respectives (3.2, 5.2), tandis qu'au moins un deuxième outil MIR ou un outil MIR supplémentaire (6) reste fermé et la première ébauche (10) est transférée de la moitié d'outil fixe ou mobile (3.1, 3.2) de l'outil de moulage par injection (3) vers la moitié d'outil fixe ou mobile (5.1, 5.2) du premier outil MIR (5),
- au cours d'un troisième cycle, l'outil de moulage par injection (3) et le premier outil MIR ou un outil MIR supplémentaire (5) sont fermés par le déplacement des moitiés d'outil mobiles respectives (3.2, 5.2) et une autre opération de moulage par injection est effectuée dans l'outil de moulage par injection (3) en vue de produire une deuxième ébauche ou une ébauche supplémentaire (10) et un processus MIR est effectué dans le premier outil MIR ou l'outil MIR supplémentaire (5) en vue de poursuivre le traitement de la première ébauche (10) afin d'en faire le/un composant fini (12),
- au cours d'un quatrième cycle, l'outil de moulage par injection (3) et le deuxième outil MIR ou l'outil MIR supplémentaire (6) sont ouverts par le déplacement des moitiés d'outil mobiles respectives (3.2, 6.2), tandis qu'au moins le premier outil MIR ou l'outil MIR supplémentaire (5) reste fermé et la deuxième ébauche (10a) est transférée de la moitié d'outil fixe ou mobile (3,1, 3.2) de l'outil de moulage par injection (3) vers la moitié d'outil fixe ou mobile vide ou vidée (6.1, 6.2) du deuxième outil MIR ou de l'outil MIR supplémentaire (6), le composant fini (12) étant prélevé de la moitié d'outil fixe ou mobile (6.1, 6.2) du deuxième outil MIR ou de l'outil MIR supplémentaire (6) en vue du vidage,
- au cours d'un cinquième cycle, l'outil de moulage par injection (3) et le deuxième outil MIR ou l'outil MIR supplémentaire (6) sont fermés par le déplacement des moitiés d'outil mobiles respectives (3.2, 6.2) et l'opération de moulage par injection est effectué dans l'outil de moulage par injection (3) en vue de produire une troisième ébauche (10) et un processus MIR est effectué dans le deuxième outil MIR ou l'outil MIR supplémentaire (6) en vue de poursuivre le traitement de la deuxième ébauche (10b) afin d'en faire le/un composant fini (12),
- au cours d'un sixième cycle, l'outil de moulage par injection (3) et le premier outil MIR ou un outil MIR supplémentaire (5) sont ouverts par le déplacement des moitiés d'outil mobiles respectives (3.2, 5.2), tandis que le deuxième outil MIR ou l'outil MIR supplémentaire (6) reste fermé et la troisième ébauche (10) est transférée de la moitié d'outil fixe ou mobile (3,1, 3.2) de l'outil de moulage par injection (3) vers la moitié d'outil fixe ou mobile vide ou vidée (5.1, 5.2) du premier outil MIR ou d'un autre outil MIR supplémentaire (5), le composant fini (12) étant prélevé de la moitié d'outil fixe ou mobile (5.1, 5.2) du premier outil MIR ou de l'outil MIR supplémentaire (5) en vue du vidage,
- et que le déroulement se répète de manière cyclique à partir du troisième cycle.

2. Procédé selon la revendication 1,
**caractérisé en ce que**
les moitiés d'outil mobiles respectives qui se ferment ou s'ouvrent (5.2, 6.2) de l'outil MIR respectif (5, 6) se déplacent avec la moitié d'outil mobile (3.2) de l'outil de moulage par injection (3) et/ou que les moitiés d'outil mobiles (5.2, 6.2) de l'outil MIR respectif (5, 6) restent sur la moitié d'outil fixe (5.1, 6.1) de l'outil MIR respectif (5, 6) indépendamment de la moitié d'outil mobile (3.2) de l'outil de moulage par injection (3).

3. Procédé selon l'une des revendications 1 et 2,
**caractérisé en ce que**
un verrouillage des moitiés d'outil fixes et mobiles (5.1, 5.2, 6.1, 6.2) de l'outil MIR respectif (5, 6) est effectué et/ou un couplage des moitiés d'outil mobiles respectives (5.2, 6.2) de l'outil MIR respectif (5, 6) avec la moitié d'outil mobile (3.2) de l'outil de moulage par injection (3) ou avec un autre élément structurel de la machine de transformation des matières plastiques (1) est effectué en fonction du temps de cycle de moulage par injection et du temps de cycle MIR.

4. Procédé selon l'une des revendications 1 à 3,
**caractérisé en ce que**
le déplacement ou le transfert de l'ébauche (10) entre les et/ou le vidage des moitiés d'outil fixes ou mobiles (3.1, 3.2, 5.1, 5.2, 6.1, 6.2) s'effectue de manière automatisée.

5. Dispositif de fabrication de pièces moulées en plastique multicomposants dans lequel un outil de moulage par injection (3), comprenant une moitié d'outil fixe et une moitié d'outil mobile (3.1, 3.2), et un outil MIR (5), comprenant respectivement une moitié d'outil fixe et une moitié d'outil mobile (5.1, 5.2), est installé sur une machine de transformation des matières plastiques (1), la moitié d'outil fixe (5.1) de l'outil MIR (5) étant agencée de façon adjacente à la moitié d'outil fixe (3.1) de l'outil de moulage par injection (3) dans le sens radial par rapport au sens de fermeture des moitiés d'outil mobiles (3.2, 5.2),
**caractérisé en ce que**
la moitié d'outil mobile (5.2) de l'outil MIR (5) et la moitié d'outil mobile (3.2) de l'outil de moulage par injection (3) sont constituées de sorte à pouvoir être fermées simultanément, les moitiés d'outil MIR (5.1, 5.2) étant constituées de sorte à pouvoir être verrouillées ensemble indépendamment de l'outil de moulage par injection (3) et la moitié d'outil mobile (3.2) de l'outil de moulage par injection (3) étant constituée de sorte à pouvoir être ouverte sans ou avec la moitié d'outil mobile (5.2) de l'outil MIR (5).

6. Dispositif de fabrication de pièces moulées en plastique multicomposants dans lequel un outil de moulage par injection (3), comprenant une moitié d'outil fixe et une moitié d'outil mobile (3.1, 3.2), et au moins deux outils MIR (5, 6), comprenant chacun une moitié d'outil fixe et une moitié d'outil mobile (5.1, 5.2, 6.1, 6.2), est installé sur une machine de transformation des matières plastiques (1), les moitiés d'outil fixes (5.1, 6.1) des outils MIR (5, 6) étant agencées de façon adjacente à la moitié d'outil fixe (3.1) de l'outil de moulage par injection (3) dans le sens radial par rapport au sens de fermeture des moitiés d'outil mobiles (3.2, 5.2, 6.2),
**caractérisé en ce que**
les moitiés d'outil mobiles (5.2, 6.2) des outils MIR (5, 6) et la moitié d'outil mobile (3.2) de l'outil de moulage par injection (3) sont constituées de sorte à pouvoir être fermées simultanément, les moitiés d'outil MIR (5.1, 5.2, 6.1, 6.2) étant constituées de sorte à pouvoir être verrouillées ensemble indépendamment de l'outil de moulage par injection (3) et la moitié d'outil mobile (3.2) de l'outil de moulage par injection (3) étant constituée de sorte à pouvoir être ouverte sans ou avec au moins l'une des moitiés d'outil mobiles (5.2, 6.2) des outils MIR (5, 6).

7. Dispositif selon l'une des revendications 5 et 6,
**caractérisé en ce que**
les moitiés d'outil fixes et mobiles (5.1, 5.2, 6.1, 6.2) des outils MIR respectifs (5, 6) sont constituées de sorte à pouvoir être verrouillées individuellement.

8. Dispositif selon l'une des revendications 5 à 7,
**caractérisé en ce que**
les moitiés d'outil mobiles respectives (5.2, 6.2) des outils MIR (5, 6) sont couplées ou constituées de sorte à pouvoir être couplées ou reliées directement ou indirectement avec la moitié d'outil mobile (3.2) de l'outil de moulage par injection (3) ou avec un autre élément structurel de la machine de transformation des matières plastiques (1).

9. Dispositif selon l'une des revendications 5 à 8,
**caractérisé en ce que**
les moitiés d'outil mobiles respectives (5.2, 6.2) des outils MIR (5, 6) sont agencées sur une plaque de serrage (4) ou une plaque de fond (4) commune ou propre à chacune des moitiés ou commune avec la moitié d'outil mobile (3.2) de l'outil de moulage par injection (3).

10. Dispositif selon l'une des revendications 5 à 9,
**caractérisé en ce que**
pour ouvrir l'outil MIR respectif (5, 6), la moitié d'outil mobile (5.2, 6.2) de l'outil MIR (5, 6) est constituée de sorte à pouvoir être déplacée de manière différée ou simultanée par rapport à la moitié d'outil mobile (3.2) de l'outil de moulage par injection (3) et/ou au moyen de la plaque de serrage (4) ou de la plaque de fond (4) commune.

11. Dispositif selon l'une des revendications 5 à 10,
**caractérisé en ce que**
l'outil MIR (5) ou les outils MIR (5, 6) sont chacun prévus en quinconce sur le côté et/ou au-dessus et/ou en-dessous de l'outil de moulage par injection (3).

12. Dispositif selon l'une des revendications 5 à 11,
**caractérisé en ce que**
un verrouillage par adhérence et/ou par coopération de formes, par exemple un système de clavettes à entraînement mécanique, hydraulique, pneumatique ou électrique ou un verrouillage magnétique, est prévu en tant que verrouillage des moitiés d'outil mobiles et fixes (5.1, 5.2, 6.1, 6.2) des outils MIR respectifs (5, 6).

13. Dispositif selon l'une des revendications 5 à 12,
**caractérisé en ce que**
la moitié d'outil mobile (5.2, 6.2) des outils MIR respectifs (5, 6) est constituée de sorte à pouvoir être couplée de manière amovible sur la plaque de serrage (4) ou la plaque de fond (4) respective, étant prévu un couplage par adhérence et/ou par coopération de formes, par exemple sous la forme d'un couplage à entraînement mécanique, hydraulique, pneumatique ou électrique ou un couplage magnétique.
